# EUROPEAN PATENT APPLICATION

(11) **EP 4 057 040 A1**
(43) Date of publication of application: **14.09.2022**
(21) Application number: 22160771.6
(22) Date of filing: 08.03.2022
(51) Int. Cl.: G02B 6/44, H02G 15/013

(54) **SEALING AND RETENTION ARRANGEMENT FOR A CLOSURE**

(30) Priority: 08.03.2021 US 202163158034 P; 08.10.2021 US 202163253852 P
(71) Applicant: CommScope Technologies LLC, Hickory, NC 28602 (US)
(72) Inventor: GEENS, Johan, Hickory, 28602 (US); VOS, Bart, Hickory, 28602 (US); VERMEULEN, Pieter, Hickory, 28602 (US); LIEFSOENS, Ronnie Rosa Georges, Hickory, 28602 (US); SYLVESTER, Deon Craig, Hickory, 28602 (US); PASEK, Jiri, Hickory, 28602 (US)
(74) Representative: Murgitroyd & Company

(57) **Abstract**

A sealing and retention arrangement mounts within a port of a closure. The sealing and retention arrangement includes a retention block, a gel block, and a securement block. The securement blocks releasably couples the gel block to the retention block. The securement block is configured to releasably hold a plurality of cables or blown fiber tubes. The securement block is configured to receive a plurality of gas blockers mounted to the blown fiber tubes.

## Description

### Cross-Reference to Related Applications

This application claims the benefit of U.S. Patent Application Serial No. 63/158,034, filed on 8 March 2021 and claims the benefit of U.S. Patent Application Serial No. 63/253,852, filed on 8 October 2021, the disclosures of which are incorporated herein by reference in their entireties.

### Background

Some optical cable organizers include closures housing an organizer. Cables (e.g., feeder cables, drop cables, and tubes) are routed into ports of the closure and secured to a base of the closure. The cables also can be sealed within the ports using gel blocks. Fibers of the cables are broken out from outer jackets or tubes and routed to the organizer (e.g., for splicing and/or storage). For example, the fibers can be spliced at management trays that are pivotally mounted to the organizer.

Improvements are desired.

### Summary

Some aspects of the disclosure are directed at an enclosure arrangement including a closure defining a port; and a sealing and retention arrangement mountable to the closure at the port. The sealing and retention arrangement includes a gel block releasably coupled to a retention block. The retention block defines one or more outwardly-facing slots sized to retain tubes.

In certain implementations, a securement block holds the gel block to the retention block. In certain examples, the securement block is configured to engage a plurality of arms or extensions of the gel block when the securement block is laterally slid into mounting stations at the retention block. In an example, the securement block snap fits to the retention block. In certain examples, the securement block includes tube/cable retention fingers. In certain examples, the securement block includes a retention wall against which blockers (e.g., a gas blocker) can be abutted. In an example, the retention wall defines notches allowing fibers extending past the blockers to route past the retention wall.

In certain implementations, the retention block includes a mounting arrangement that enables movement of the retention block relative to the closure within a range of motion while the retention block remains coupled to the closure. Movement of the retention block in a first direction along the range of motion increases a spacing between at least one of the outwardly-facing slots and a circumferential wall of the port.

In some implementations, the mounting arrangement enables lateral shifting of the retention block relative to the closure while the retention block remains coupled to the closure. In some implementations, the mounting arrangement enables axial lifting of the retention block relative to the closure while the retention block remains coupled to the closure. In some implementations, the mounting arrangement enables lateral tilting of the retention block relative to the closure while the retention block remains coupled to the closure.

Other aspects of the disclosure are directed to a method of installing a tube at a closure. The closure includes a base and a sealing and retention arrangement mountable to the base. The sealing and retention arrangement includes a gel block and a retention block. The retention block defines an outwardly-facing slot. The method includes moving the retention block relative to the base within a range of motion to enlarge a spacing between an open end of the outwardly-facing slot and a circumferential wall of the port, the retention block remaining coupled to the base within the range of motion; and routing a first end of the tube through the port and past the retention block within the enlarged spacing between the outwardly-facing slot and the circumferential wall so that the tube remains external of the outwardly-facing slot.

In certain implementations, the method also includes attaching a blocker to the first end of the tube; routing the tube partially back through the port; and pushing the tube into the outwardly-facing slot of the retention block to inhibit further routing of the tube through the port.

In certain implementations, the method also includes decoupling the gel block from the retention block; moving the gel block away from the retention block through a port defined by the base; mounting the tube within the gel block; and remounting the gel block to the retention block.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

The accompanying drawings, which are incorporated in and constitute a part of the description, illustrate several aspects of the present disclosure. A brief description of the drawings is as follows:
FIG. 1 is a perspective view of an example cable closure including a cable sealing and retention arrangement aligned with a cable port defined in the closure;
FIG. 2 shows an axial cross-section of the closure of FIG. 1;
FIG. 3 is a perspective view of an example sealing and retention arrangement suitable for use with the closure of FIG. 1;
FIG. 4 shows the sealing and retention arrangement of FIG. 3 with the tubes removed and a gel block, a retention block, and fasteners of the sealing and retention arrangement exploded from each other;
FIG. 5 is a top perspective view of the retention block of FIG. 4;
FIG. 6 is a bottom perspective view of the retention block of FIG. 5;
FIG. 7 is a side elevational view of the retention block of FIG. 5;
FIG. 8 illustrates an example tube with a blocker mounted to an end thereof;
FIG. 9 shows the blocker exploded from the tube;
FIG. 10 shows the tube of FIG. 8 mounted to the retention block of FIG. 5;
FIG. 11 is a top perspective view of a base of the closure of FIG. 2;
FIG. 12 is a top plan view of the base of FIG. 11;
FIG. 13 is an enlarged view of a portion of FIG. 11;
FIG. 14 shows the retention block of FIGS. 5-7 mounted to the base of FIG. 11 where a portion of a sidewall of the base is removed for ease in viewing the interaction between a first mounting arrangement of the retention block and a first mounting station of the base;
FIG. 15 shows a tube being routed through a closure port and past the retention block of FIG. 14 during installation of the tube;
FIG. 16 shows the tube routed back through the closure port until the blocker aligns with a pocket of the retention block;
FIG. 17 shows the blocker placed within the pocket of the retention block and the tube disposed within the outwardly-facing slot of the retention block;
FIG. 18 is a top plan view of the retention block mounted at a drop port defined by the base of FIG. 14;
FIG. 19 is a side elevational view of a portion of a latch member disposed at a mounting station with the sidewall of the base removed while the mounting station remains for ease in viewing the interaction between the latch member and the mounting station;
FIG. 20 shows the latch member laterally shifted in a first direction compared to the latch member of FIG. 19;
FIG. 21 shows the retention block of FIG. 18 laterally shifted by the amount shown in FIG. 20;
FIG. 22 shows the latch member laterally shifted in an opposite second direction compared to the latch member of FIG. 19;
FIG. 23 shows the latch member laterally tilted along a first rotational direction compared to the latch member of FIG. 19;
FIG. 24 is a top perspective view of the example closure with a dome removed for ease in viewing the closure interior, the closure holding four sealing and retention arrangements;
FIG. 25 is a perspective view of FIG. 24 with two of the sealing and retention arrangements removed for clarity;
FIG. 26 is a top perspective view of another example closure with a dome exploded away from the base for ease in viewing the closure interior, the closure holding four example sealing and retention arrangements configured in accordance with the principles of the present disclosure;
FIG. 27 is an enlarged view of a portion of FIG. 26 with latches for the dome removed for ease in viewing;
FIG. 28 is a perspective view of the sealing and retention arrangement of FIG. 26, the sealing and retention arrangement including a gel block, a retention block, and a securement block;
FIG. 29 is an exploded view of the sealing and retention arrangement of FIG. 28 with the tubes and fibers removed for ease in viewing;
FIG. 30 is a top perspective view of the securement block of FIG. 28;
FIG. 31 is a bottom perspective view of the securement block of FIG. 28;
FIG. 32 is an elevational view of the securement block of FIG. 28;
FIG. 33 is a side elevational view of the securement block of FIG. 28;
FIG. 34 is a top plan view of the securement block of FIG. 28;
FIG. 35 is a bottom plan view of the securement block of FIG. 28;
FIG. 36 shows the securement block of the sealing and retention arrangement of FIG. 28 exploded away from the retention block for ease in viewing the mounting stations for the lock members of the securement block;
FIG. 37 shows the securement block of FIG. 36 removably coupled to the retention block in that the lock members are received at the mounting stations;
FIG. 38 is another perspective view showing the securement block removably coupled to the retention block; and
FIG. 39 is an enlarged view of a distal end of an arm of the gel block of FIG. 28 received by a lock member of the securement block, with a top portion of the securement block removed for ease in viewing.

### Detailed Description

Reference will now be made in detail to exemplary aspects of the present disclosure that are illustrated in the accompanying drawings. Wherever possible, the same reference numbers will be used throughout the drawings to refer to the same or like parts.

In general, the disclosure relates to a sealing and retention arrangement that secures cables (e.g., drop cables, tubes, etc.) at one or more ports of a cable closure. The sealing and retention arrangement includes a retention block that mounts to the closure to inhibit axial pull-out of the cables from the closure. The sealing and retention arrangement also includes a gel block sealing around the cables at the ports to inhibit ingress of contaminants into the closure. The gel block is separable from the retention block to enable the addition and/or replacement of one or more cables at the ports without disconnecting the retention block from the closure. The retention block is movable relative to the closure along a range of motion without disconnecting the retention block from the closure. Throughout the disclosure, the cables will be referred to as "drop cables" for convenience. It will be understood, however, that any type of cables can be managed by the sealing and retention arrangement.

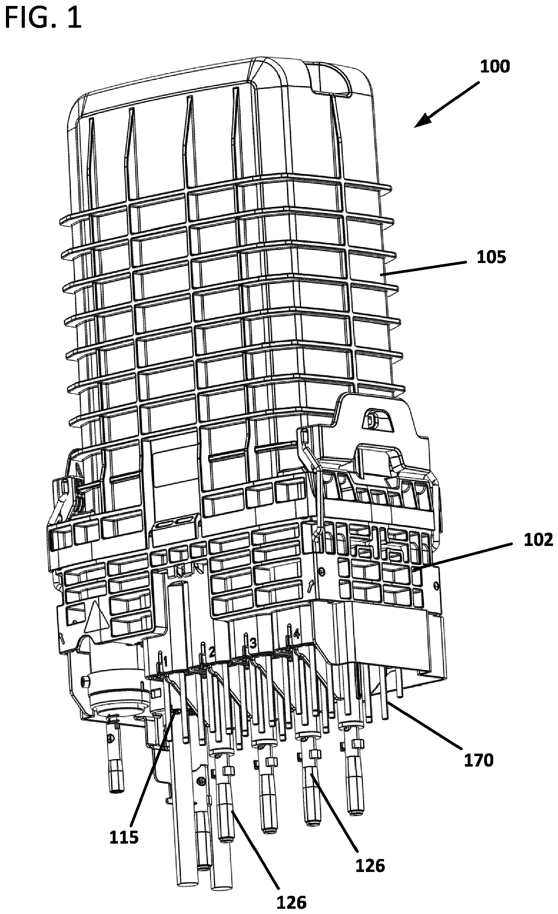

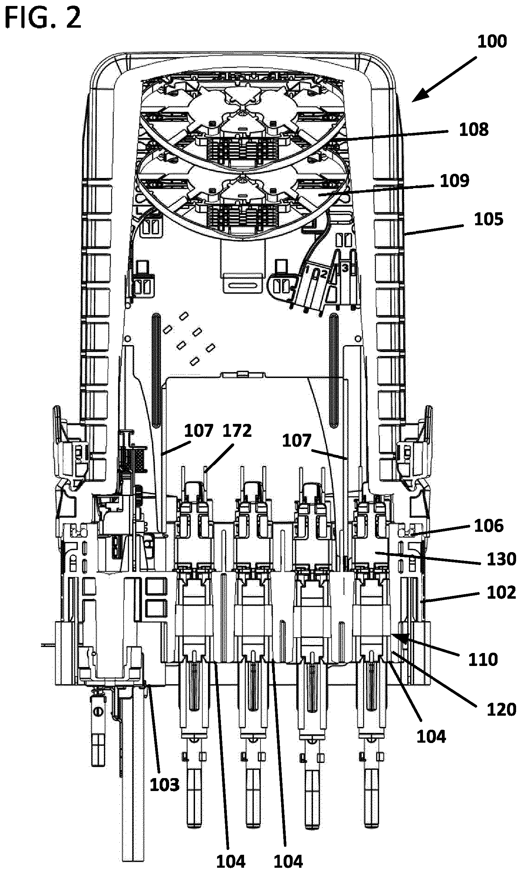

Referring to FIGS. 1 and 2, one example cable closure 100 receiving one or more feeder cables 115 and one or more drop fibers 172 via tubes 170 (e.g., blown fiber conduits, pushable fiber ducts, etc.) is shown. In other examples, the closure 100 may receive jacketed cables instead of tubes 170. The cable closure 100 includes a base 102 defining at least one feeder cable port 103 and at least one drop port 104. In the example shown, the base 102 defines four drop ports 104. In other examples, however, the base 102 may define a greater or lesser number (e.g., one, two, three, five, six, eight, ten) of ports 104. A dome 105 is configured to mount to the base 102. A gasket or other seal 106 extends around a periphery of the base 102 and/or the open end of the dome 105 to provide sealing between the base 102 and the dome 105. A cable organizer 108 is attached to the base 102 and is enclosed by the dome 105 when the dome 105 is mounted to the base 102. One or more optical components (e.g., fiber management trays 109, bend radius limiters, routing guides, etc.) can be mounted to the cable organizer 108.

A respective sealing and retention arrangement 110 is shown positioned within each of the drop ports 104 so that the gel block 120 is surrounded (e.g., protected) by the base 102 and the retention block 130 is disposed at least partially within an interior of the dome 105 above the base 102. In some implementations, one or more tubes 170 are mounted to the sealing and retention arrangement 110. In other implementations, one or more drop cables are mounted to the sealing and retention arrangement 110. The sealing and retention arrangement 110 seals the corresponding drop port 104 and anchors the tubes 170 or cables relative to the closure 100. In some implementations, one or more of the tubes 170 or cables can be mounted to the sealing and retention arrangement 110 before the sealing and retention arrangement 110 is mounted in the drop port 104. In other implementations, one or more of the tubes 170 or cables can be mounted to the sealing and retention arrangement 110 after the sealing and retention arrangement 110 is mounted in the drop port 104 as will be discussed in more detail herein.

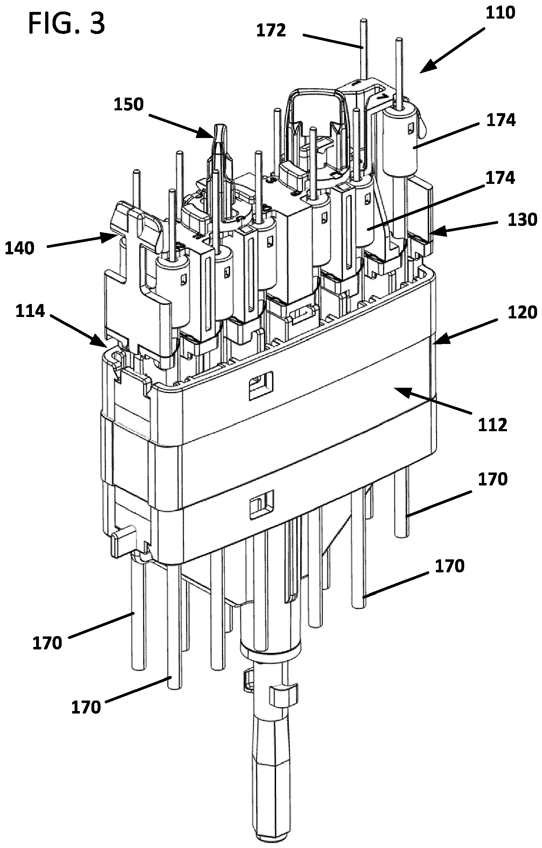

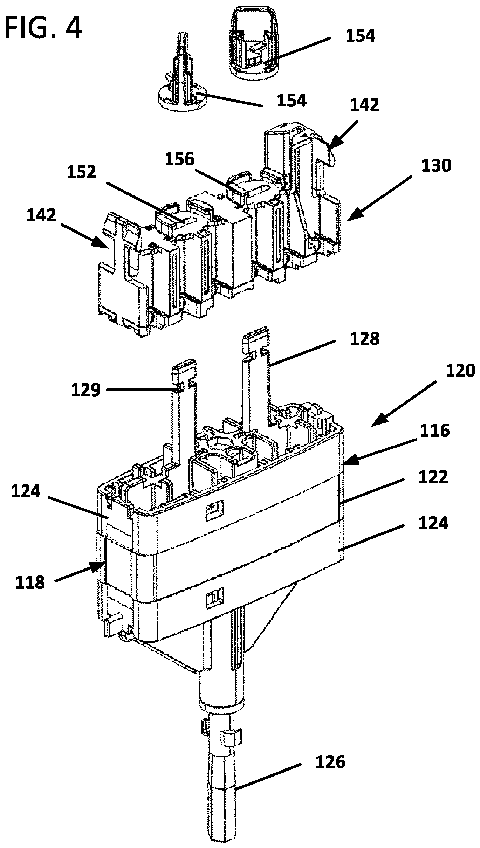

Referring to FIGS. 3 and 4, the sealing and retention arrangement 110 includes a gel block 120 and a retention block 130. The tubes 170 are routed through and sealed by the gel block 120; and are held in axially fixed positions by the retention block 130. Optical fibers 172 of the drop cables 170 can extend towards the cable organizer 108. The sealing and retention arrangement 110 includes a first mounting arrangement 140 that is configured to secure the sealing and retention arrangement 110 (and hence the tubes 170) to the base 102 of the closure 100. In some implementations, the first mounting arrangement 140 is releasable to enable selective removal of the retention block 130 from the base 102.

FIG. 3 illustrates one example sealing and retention arrangement 110 including a gel block 120 and a retention block 130 with a plurality of tubes 170 mounted thereto. In some implementations, the gel block 120 is selectively removable from the retention block 130. As will be described in more detail herein, a second mounting arrangement 150 selectively secures the gel block 120 to the retention block 130. When the second mounting arrangement 150 is released or removed from the sealing and retention arrangement 110, the gel block 120 can be moved away from the retention block 130 along the axial lengths of the tubes 170 held thereat.

The sealing and retention arrangement 110 defines one or more passages in which tubes 170 can be disposed when mounted to the sealing and retention arrangement 110. The one or more passages extend through both the gel block 120 and the retention block 130. In certain implementations, the sealing and retention arrangement 110 defines one or more passages at opposite sides of the sealing and retention arrangement 110. In the example shown, the sealing and retention arrangement 110 defines a first row of passages at a first side 112 of the sealing and retention arrangement 110 and a second row of passages at a second side 114 of the sealing and retention arrangement 110.

Referring to FIG. 4, the gel block 120 includes a gel seal 122 disposed between top and bottom plates 124. An actuator arrangement 126 extends through the gel seal 122 and both plates 124 to hold these components together. The gel seal 122 and plates 124 are shaped to receive tubes 170. For example, these components can define open channels along which tubes 170 can be routed. Tightening the actuator arrangement 126 draws the plates 124 closer together, thereby compressing the gel seal 122. Loosening the actuator arrangement 126 enables the plates 124 to move apart, thereby releasing the gel seal 122.

One or more extensions 128 extend upwardly from the top plate 124 to form part of the second mounting arrangement 150. The extensions 128 are sized to fit through passages 152 defined through the retention block 130. Fasteners 154 attach to tips of the extensions 128 after the extensions 128 pass through the passages 152 to hold the gel block 120 at the retention block 130. In the example shown, the fasteners 154 are caps that twist into slots 129 defined at the ends of the extensions 128 and grooves defined by retainers 156 of the retention block 130.

The first mounting arrangement 140 includes opposing latch members 142 at opposite ends 116, 118 of the sealing and retention arrangement 110. The opposite sides 112, 114 of the sealing and retention arrangement 110 extend between the opposite ends 116, 118. In certain examples, the passages are disposed in rows extending between the latch members 142.

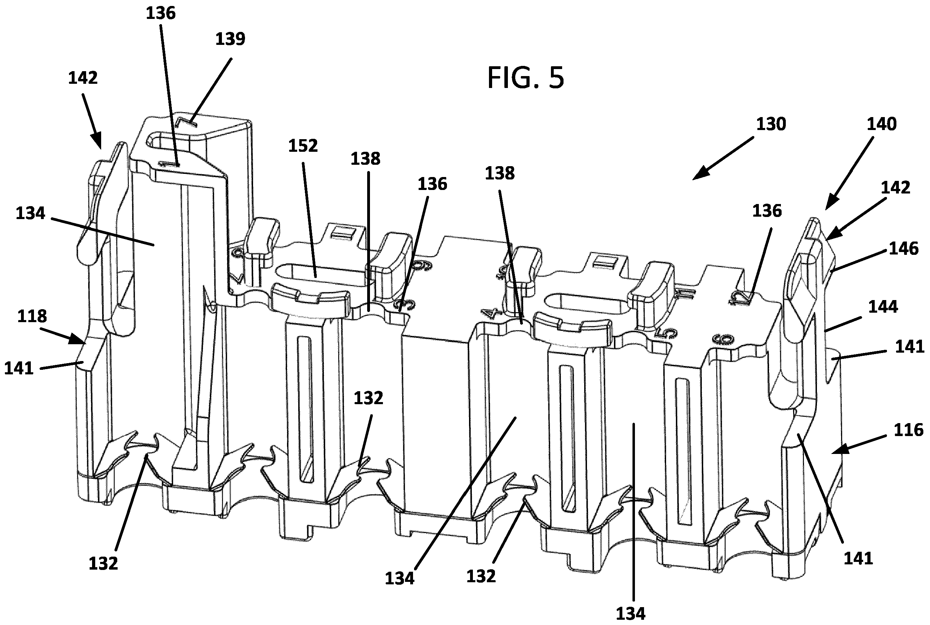

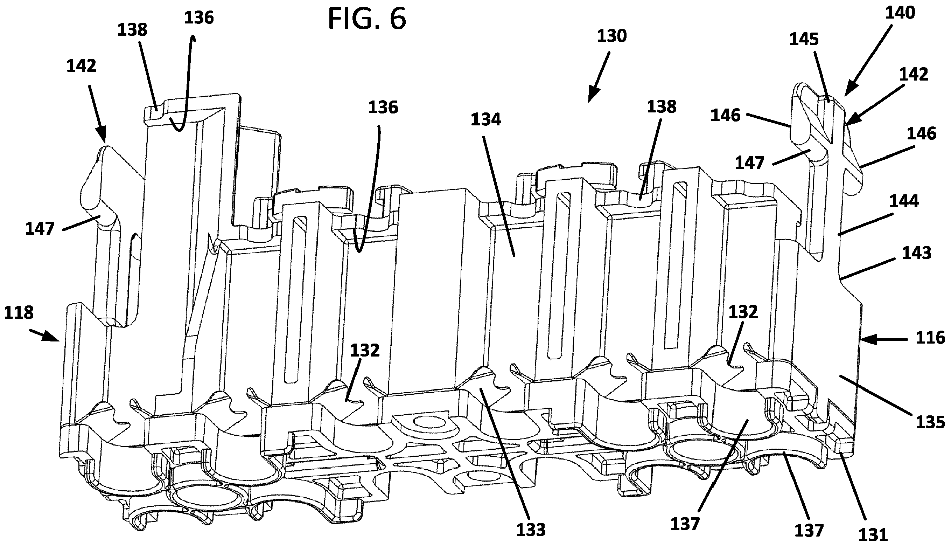

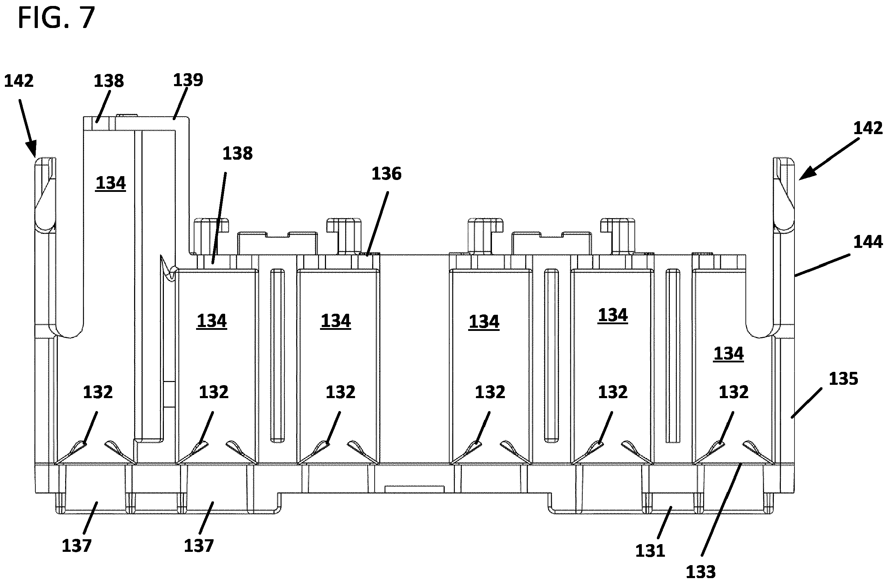

FIGS. 5-7 illustrate one example implementation of a retention block 130 suitable for use with the sealing and retention arrangement 110. Each of the latch members 142 of the retention block 130 includes a deflectable beam 144 extending between a base end 143 and a free end 145. The base end 143 is attached to or integral with an abutment surface 141 of the retention block 130. Each of the latch members 142 also includes first and second arms 146 extending laterally outwardly from the deflectable beam 144 at the free end 145. In certain examples, the first and second arms 146 have contoured bottom surfaces 147 facing the main region of the retention block 130.

The retention block 130 defines an outwardly-facing slot 132 at the first side 112 of the sealing and retention arrangement 130. A tube 170 can be slid into the outwardly-facing slot 132 to axially retain the tube 170 at the retention block 130. In certain implementations, the retention block 130 also defines a pocket 134 aligned with the outwardly-facing slot 132. The outwardly-facing slot 132 is disposed between the pocket 134 and the gel block 120 when the sealing and retention arrangement 110 is assembled. In certain examples, the retention block 130 defines a plurality of outwardly-facing slots 132 at the first side 112. In certain examples, the retention block 130 defines one or more outwardly-facing slots 132 at each of the first and second sides 112, 114.

In certain implementations, the retention block 130 includes a spring clip 133 sandwiched between a first piece 131 and a second piece 135. In the example shown, fastener openings extend through all three pieces 131, 133, 135 to enable fasteners to hold the retention block 130 together. In other implementations, however, the pieces 131, 133, 135 can be latched, friction-fit, or otherwise secured together. The spring clip 133 includes a plurality of sprung flanges that cooperate to define the slots 132 in which the tubes 170 can be disposed. The sprung flanges inhibit axial movement of the tubes 170 through the slots 132 while enabling selective lateral movement of the tubes 170 (e.g., back out of the slots 132).

Each of the spring clip 133 and first and second pieces 131, 135 defines open-ended channels or slots that cooperate to define the passages in which tubes 170 can be disposed. For example, the first piece 131 can define open-ended channels 137 that each align with a respective one of the outwardly-facing slots 132 of the spring clip 133. The second piece 135 defines the pocket(s) 134. The second piece 135 also may include retention walls 136 that partially close the pockets 134 at a top of the second piece 135. Each of the retention walls 136 defines an outwardly-facing groove 138. In certain examples, each of the retention walls 136 includes a number or other indicia for labeling the passages of the sealing and retention arrangement 110.

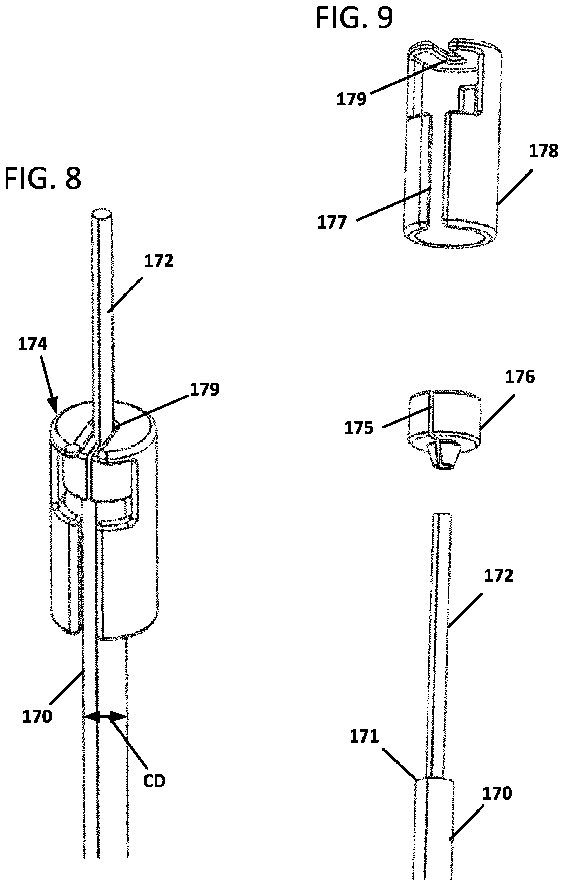

FIGS. 8 and 9 illustrate an example tube (e.g., tube) 170 suitable for being routed into the interior of the closure 100. One or more optical fibers 172 (e.g., drop fibers) can be blown, pulled, pushed, or otherwise routed into the interior of the closure 100 using the tube 170.

In certain implementations, the tubes 170 have cross-dimensions CD ranges from about 4 mm to about 8 mm. In certain examples, the tubes 170 have cross-dimensions CD ranging between 4 mm and 6 mm. In certain examples, the tubes 170 have cross-dimensions CD ranging between 5 mm and 7 mm. In certain examples, the tubes 170 have cross-dimensions CD ranging between 6 mm and 8 mm.

In certain implementations, a blocker 174 can be disposed at a first end 171 of the tube 170 to seal between an interior of the tube 170 and the interior of the closure 100. In certain examples, the blocker 174 seals against water. In certain examples, the blocker 174 seals against gas (e.g., ambient air). In certain examples, the blocker 174 seals against both water and gas.

In certain implementations, the blocker 174 includes a cap 178 and a gasket 176 sized to fit within the cap 178. In certain examples, each of the gasket 176 and the cap 178 defines axial slits 175, 177 to enable the gasket 176, and the cap 178 to be laterally mounted onto and/or removed from a fiber 172 at the tube 170. The cap 178 defines a notch 179 continuous with the slit 177. Optical fibers 172 installed through the tube 170 extend out of the tube 170, through the notch 179, and into the interior of the closure 100. In an example, the blocker 174 is a water and gas duct seal available from Filoform B.V. of the Netherlands. Example blockers suitable for use with the tubes 170 are shown in WO 2020/204699, the disclosure of which is hereby incorporated herein by reference in its entirety.

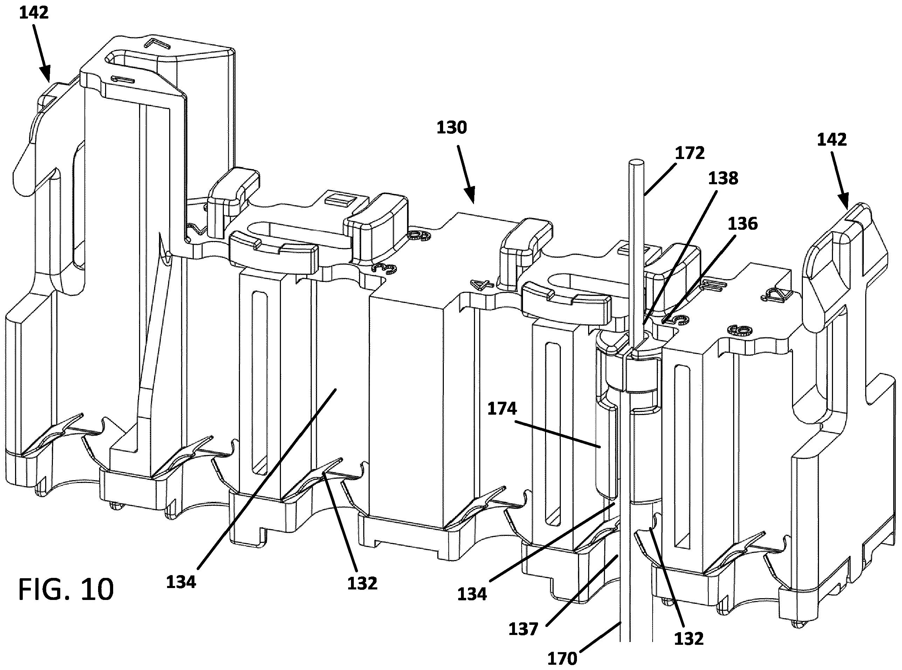

As shown in FIG. 10, the retention block 130 is configured to receive the blocker 174. For example, the pocket 134 of the retention block 130 is sized to receive the blocker 174. In some implementations, the pocket 134 is sized so that the blocker 174 friction fits within the pocket 134 to aid in retaining the blocker 174 at the pocket 134. In other implementations, the pocket 134 is wider than the blocker 174 so that the blocker 174 easily slides within the pocket 134.

In certain implementations, the blocker 174 is positioned within the pocket 134 so that the blocker 174 abuts or nearly abuts the retention wall 136 of the pocket 134. Any fibers 172 installed through the tube 170 extend through the groove 138 defined by the retention wall 136. In certain implementations, the tube 170 is sufficiently stiff to maintain the blocker 174 at the retention wall 136. Interaction between the retention wall 136 and the cap 178 of the blocker 174 inhibits the blocker 174 from falling out of the pocket 134.

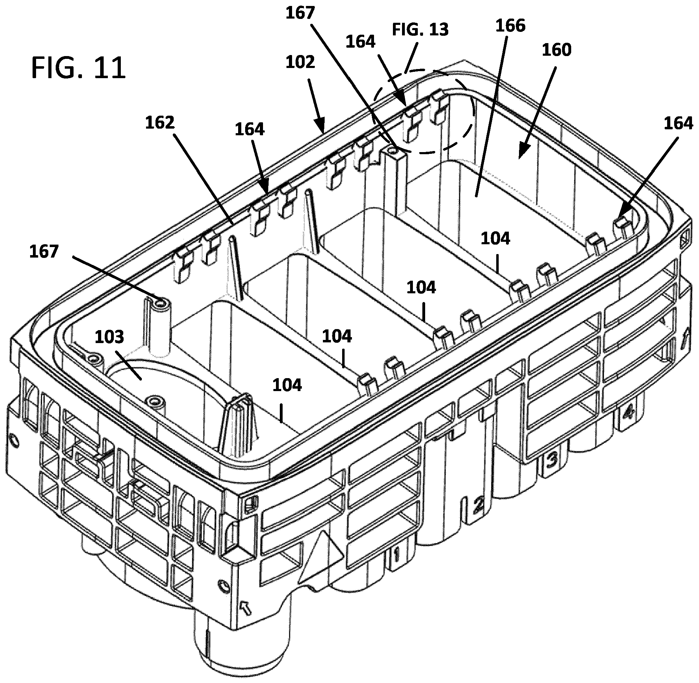

Referring now to FIGS. 11-13, the base 102 is configured to receive one or more of the sealing and retention arrangements 110 to anchor the tubes 170 to the closure 100. The base 102 defines the drop ports 104, which are each bounded by an interior peripheral wall 166. The base 102 also defines a continuous interior 160 extending between interior ends of the drop ports 104 and a top of the base 102. The continuous interior 160 is bounded by a peripheral wall 162. Mounting stations 164 for the sealing and retention arrangement 110 are disposed along the peripheral wall 162 so that pairs of the mounting stations 164 oppose each other.

Each mounting station 164 includes first and second protrusions 168 that each extend inwardly from the peripheral wall 162. Each of the first and second protrusions 168 defines a first abutment surface 180 opposing the first abutment surface 180 of the other protrusion 168 of the mounting station 164. The first abutment surfaces 180 of the protrusions 168 of a mounting station 164 are spaced from each other by a distance P1.

In certain implementations, the distance P1 ranges from about 5 mm to about 15 mm. In certain examples, the distance P1 ranges from about 5 mm to about 10 mm. In certain examples, the distance P1 ranges from about 10 mm to about 15 mm. In certain examples, the distance P1 ranges from about 8 mm to about 12 mm. In an example, the distance P1 is about 10 mm.

Each protrusion 168 extends parallel to the insertion axis of the drop port 104 from a first end 182 to a second end 184. Each protrusion 168 includes an inwardly-facing surface 185 that extends between the first and second ends 182, 184 and faces the continuous interior 160 of the base 102. In certain examples, the inwardly-facing surface 185 is contoured so that the protrusion 168 extends further into the interior 160 at the first end 182 than at the second end 184. The first end 182 of each protrusion 168 defines a cradle 186. The second end 184 of each protrusion 168 defining a second abutment surface 188. In certain examples, a transition between the first abutment surface 180 and the second abutment surface 188 defines a curved corner 189.

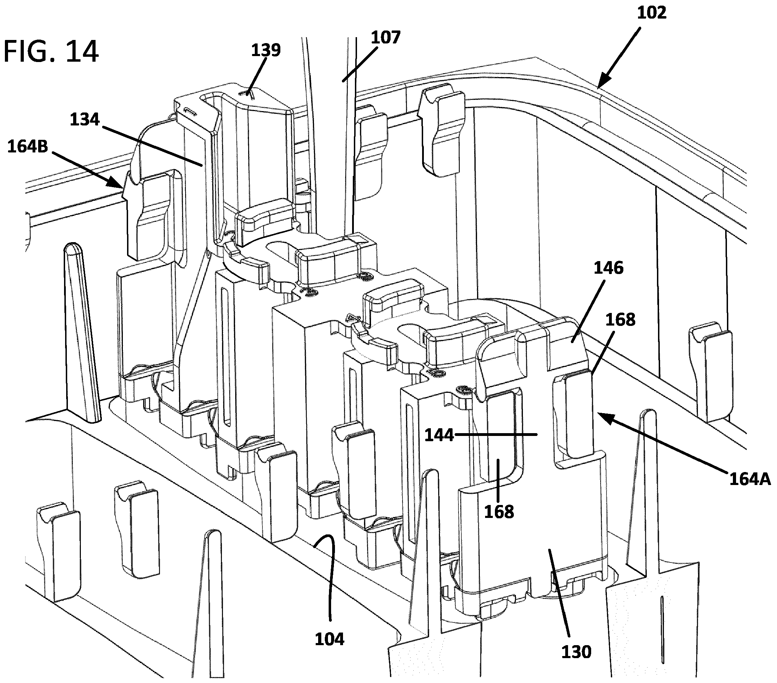

FIG. 14 illustrates the retention block 130 of FIGS. 5-7 mounted to the base 102 of FIGS. 11-13. The retention block 130 is configured to be mounted to the closure 100 through one of the cable ports 104. For example, the retention block 130 can be mounted so that the latch members 142 engaging respective ones of opposing first and second mounting stations 164A, 164B. In certain examples, the retention block 130 can be slid upwardly through the cable port 104 and into the continuous interior 160 of the base 102. As the retention block 130 is moving through the cable port 104, the latch arms 142 deflect inwardly along the inwardly-facing surfaces 185 of the protrusions 168 to enable the first mounting arrangement 140 to pass over a respective pair of mounting stations 164.

The retention block 130 is slid through the interior 160 of the base 102 until the abutment surfaces 141 (FIG. 5) of the retention block 130 abut the second abutment surfaces 188 of the protrusions 168. Engagement between the abutment surfaces 141, 188 inhibits continued axial movement of the retention block 130 through the base 102. When the arms 146 of the latch members 142 clear the protrusions 168, the deflectable beam 144 of each latch member 142 deflects back towards the peripheral wall 162 of the base 102 between the respective first and second protrusions 168. The latch member arms 146 align with the cradles 186 of the first and second protrusions 168. In certain examples, the latch member arms 146 may snap into the cradles 186. Engagement between the latch member arms 146 and the cradles 186 inhibit movement of the retention block 130 back through the cable port 104.

In some implementations, a retention block 130 can be fully populated with tubes 170 and blockers 174 prior to mounting the retention block 130 to the base 102. In other implementations, however, at least one, but fewer than all of the passages of the retention block 130 are filled before mounting the retention block 130 to the base 102. In such implementations, optical fibers 172 blown, pushed, pulled, or otherwise routed through the mounted tubes 170 may be installed at the cable organizer 108. Accordingly, it is desirable to be able to mount one or more additional tubes 170 to the retention block 130 without removing the retention block 130 from the base 102 as the retention block 130 is providing axial pull resistance for the installed optical fibers 172.

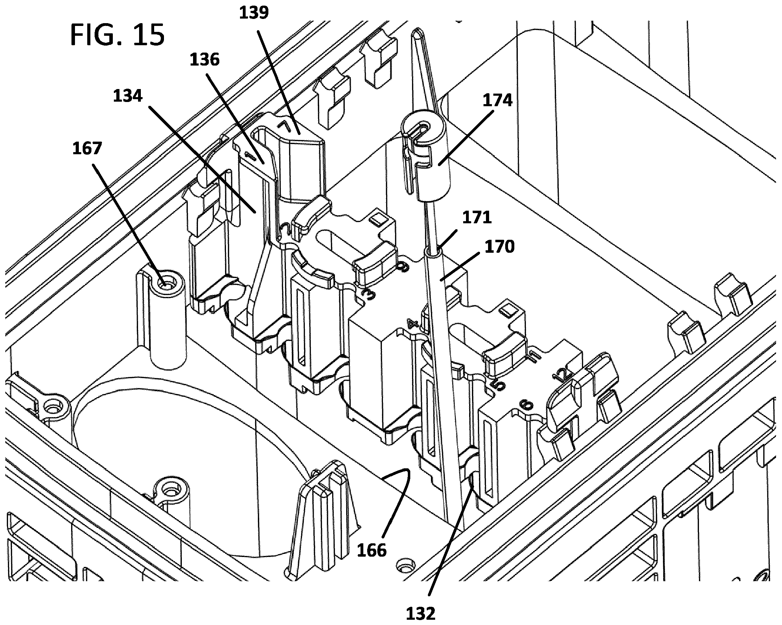

FIGS. 15-17 illustrate a process for mounting a tube 170 at the retention block 130 after the retention block 130 has been installed at the closure 100. As will be discussed herein, the retention block 130 remains coupled to the closure 100 (e.g., to the base 102 of the closure 100) throughout the process. The gel block 120 is decoupled from the retention block 130 using the second mounting arrangement 150. The gel block 120 is slid down the existing tube(s) 170 still mounted to the retention block 130. When outside the drop port 104, the gel block 120 can be depressurized and opened to enable the tube to be added to be mounted therein.

The first end 171 of the tube 170 is pushed through the drop port 104 towards the retention block 130. In certain implementations, the blocker 174 has not yet been mounted to the first end 171 of the tube 170 to facilitate installation. To install the blocker 174 on the first end 171, the tube 170 is routed past the retention block 130 to provide sufficient hand access and to allow better visibility to the first end 171 of the tube 170. Accordingly, more length of the tube 170 than can be accommodated by the retention block 130 is routed into the closure 100.

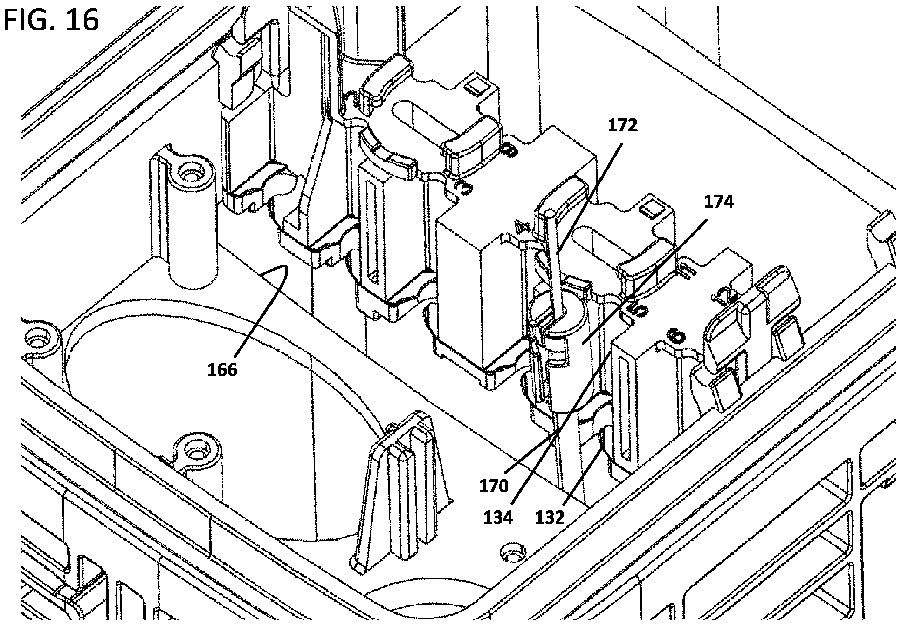

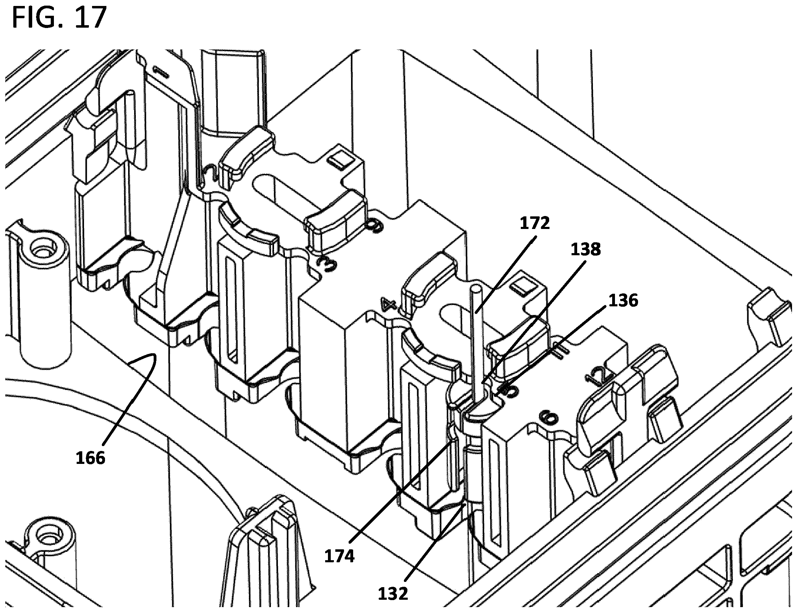

As shown in FIG. 16, after the blocker 174 is installed, the tube 170 is routed partially back through the drop port 104 until the blocker 174 aligns with the pocket 134. To enable the tube 170 to be routed back through the drop port 104, the tube 170 remains external of the outwardly-facing slot 132 during the inward and outwardly routing. As shown in FIG. 17, the tube 170 is pressed into the outwardly-facing slot 132 when the tube 170 has been routed to a suitable position relative to the retention block 130. In certain examples, the blocker 174 can be placed (e.g., snapped) into the pocket 134.

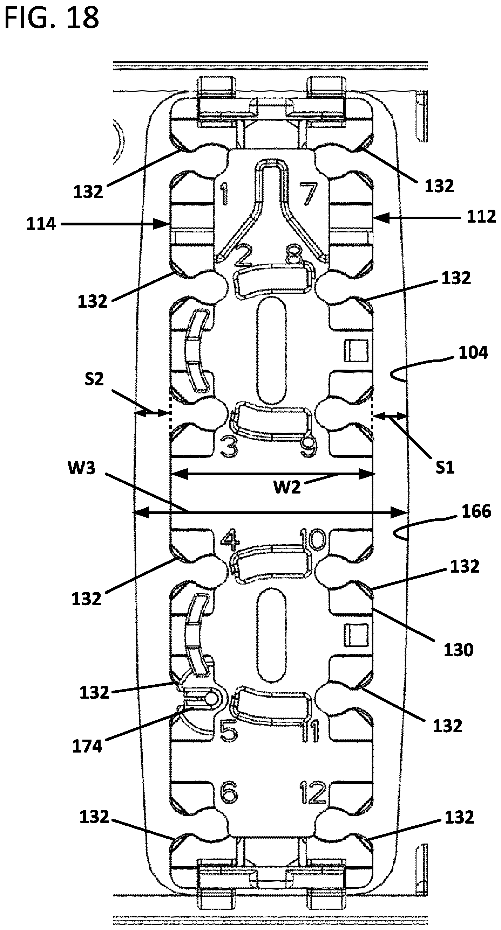

Because the tubes 170 eventually extend through the outwardly-facing slots 132 and the blockers 174 are eventually disposed with the pockets 134, density of the closure 100 can be optimized by sizing the drop ports 104 to fit close to the sides 112, 114 of the retention block 130. As shown in FIG. 18, the retention block 130 has a width W2 that is smaller than a cross-dimension W3 of the cable port 104. Accordingly, the outwardly-facing slots 132 at the first and/or second sides 112, 114 of the retention block 130 are spaced from the peripheral surface 166 of the cable port 104. In some implementations, the drop port 104 has a constant cross-dimension W3. In other implementations, the cross-dimension W3 of the drop port 104 varies over a length of the drop port 104. Accordingly, each outwardly-facing slot 132 of the retention block 130 is spaced from the peripheral wall 166 of the drop port 104 by a respective spacing.

For clarity, the spacings between the outwardly-facing slots 132 on the first side 112 of the retention block 130 and the peripheral wall 166 are referred to using reference "S1" and the spacings between the outwardly-facing slots 132 on the second side 114 of the retention block 130 and the peripheral wall 166 are referred to using reference "S2." It will be understood, however, that the spacings S1 on one of the side 112, 114 of the retention block 130 need not be the same. For example, the spacing S1 between a slot 132 in the middle of the retention block 130 and the peripheral wall 166 may be greater than the spacing S1 between a slot 132 at an end 116, 118 of the retention block 130 and the peripheral wall 166.

In certain implementations, when the spacings S1 are generally equal to the spacings S2, each of the spacings S1, S2 is not much more than a cross-dimension CD (FIG. 8) of a tube 170 intended to be mounted to the retention block 130. In certain implementations, each of the spacings S1, S2 is no more than the cross-dimension CD (FIG. 8) of a tube 170. In certain implementations, each of the spacings S1, S2 is less than the cross-dimension CD (FIG. 8) of a tube 170. Accordingly, the tube 170 is inhibited from being routed from the drop port 104, past the retention block 130, and into the closure interior while remaining external of the respective outwardly-facing slot 132 and pocket 134.

In certain implementations, the spacings S1, S2 range from between 1 mm and 8 mm. In certain examples, the spacings S1, S2 range from between 2 mm and 5 mm. In some implementations, the spacings S1, S2 are larger than the cross-dimension CD of a tube 170 at a center of the retention block 130 and smaller than the cross-dimension CD at ends 116, 118 of the retention block 130. In other implementations, the spacings S 1, S2 are smaller than the cross-dimension CD at the center of the retention block 130. In an example, the spacings S1, S2 are about 5 mm at a center of the retention block 130 and reduce to about 2-3 mm at the ends 116, 118. In certain examples, the spacings S1, S2 range from about 4-6 mm at the center of the retention block 130 and range from about 1-3 mm at the ends 116, 118 of the retention block 130.

Referring to FIGS. 16-23, the first mounting arrangement 140 enables movement of the retention block 130 relative to the closure 100 within a range of motion while the retention block 130 is coupled to the closure 100. Movement of the retention block 130 along the range of motion may increase or decrease a respective spacing between each of the outwardly-facing slots 132 and the circumferential wall 166 of the drop port 104. Enabling such movement of the retention block 130 while the retention block 130 remains connected to the closure 100 facilitates routing of the new tube 170 into the interior of the closure 100 while inhibiting axial pull strain being applied to fiber already installed at the closure 100. In some implementations, a user may move the retention block 130 relative to the base 102 before attempting to route the tube 170 past the retention block 130. In other implementations, the retention block 130 may be moved by the tube 170 as the tube 170 squeezes past the retention block 130.

In some implementations, the retention block 130 can be moved (e.g., manually by a user) relative to the base 102 to increase the spacing S1, S2 between the peripheral wall 166 and one of the outwardly-facing slots 132 to facilitate routing of the tube 170 into the closure 100. In some implementations, the retention block 130 can be laterally shifted relative to the base 102 to increase the spacing S1, S2. In other implementations, the retention block 130 can be laterally tilted relative to the base 102 to increase the spacing S1, S2. In certain examples, when the spacings S1 on one side 112, 114 of the retention block 130 is increased, the spacings S2 on the other side 114, 112 decrease.

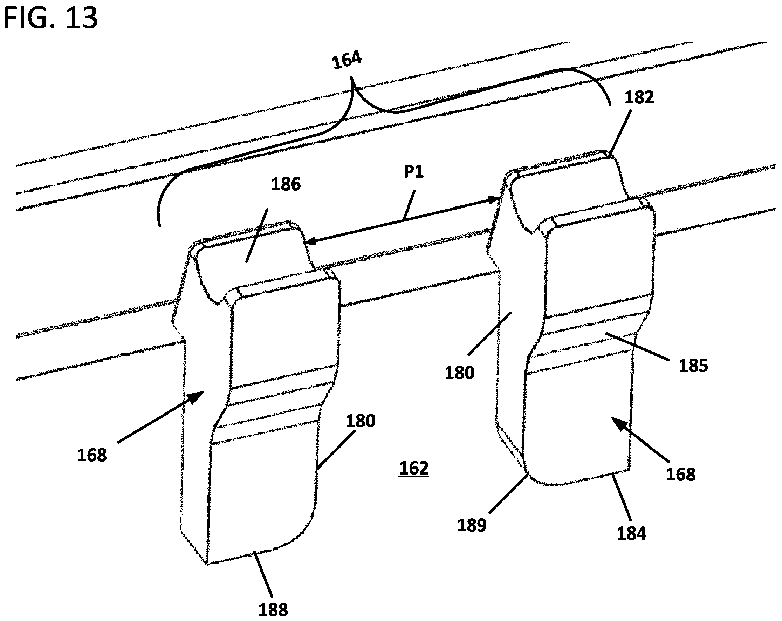

As shown in FIG. 16, the deflectable beam 144 of each latch member 142 has a width W sized to fit within the gap P1 (FIG. 13) between the first abutment surfaces 180 of the first and second protrusions 168 of a mounting station 164. In certain implementations, the width W is sufficiently small to provide room for the deflectable beam 144 to laterally shift along a first direction D1 and/or an opposite second direction D2 before one of the sides 190 of the deflectable beam 144 engages the first abutment surface 180 of one of the protrusions 168. Accordingly, the difference between the distance P1 and the width W enables limited lateral movement of the retention block 130 relative to the base 102. Limiting the lateral movement inhibits pull on the installed fibers.

In certain implementations, the width W is less than three-quarters of the distance P1. In certain implementations, the width W is more than half of the distance P1. In certain examples, the width W of the deflectable beam 144 ranges from about 3 mm to about 9 mm. In certain examples, the width W ranges from about 3 mm to about 7 mm. In certain examples, the width W ranges from about 4 mm to about 8 mm. In certain examples, the width W ranges from about 5 mm to about 7 mm. In certain examples, the width W ranges from about 4 mm to about 6 mm. In certain examples, the width W ranges from about 6 mm to about 8 mm. In certain examples, the width W is about 6 mm.

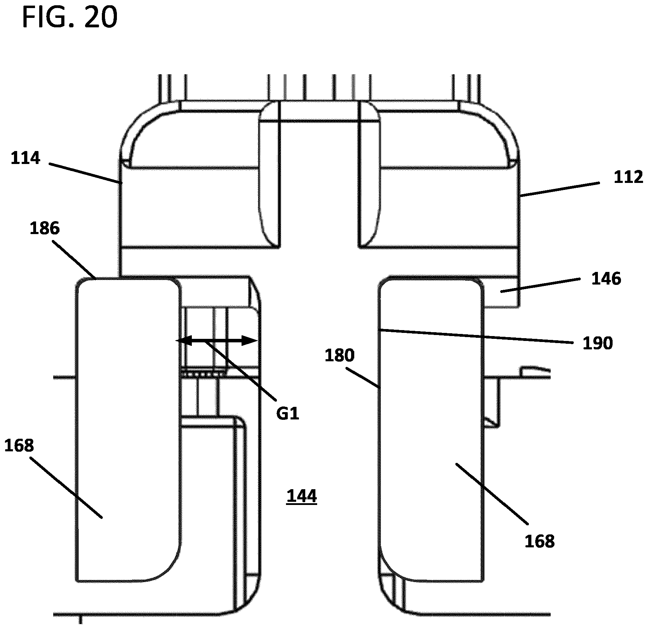

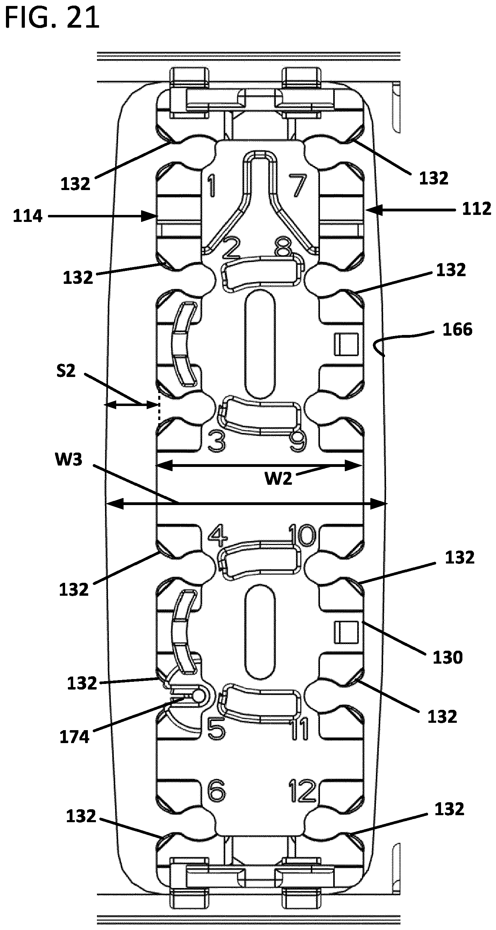

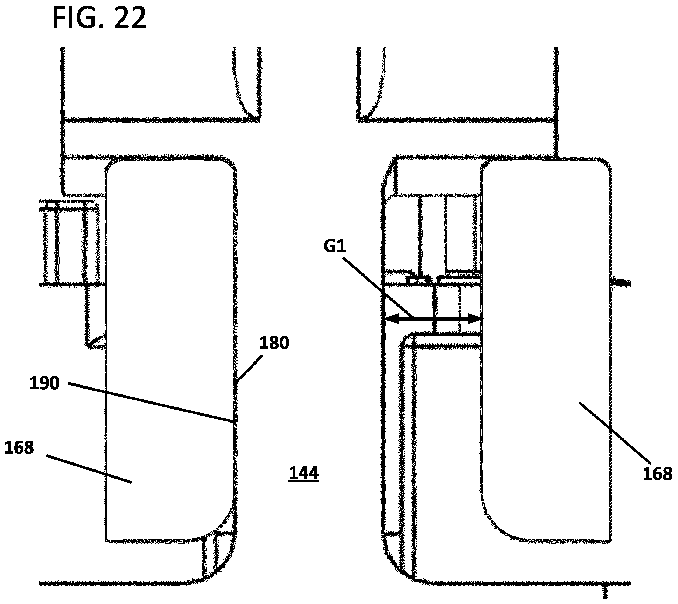

As shown in FIG. 20, the laterally shifted position provides a gap G1 between the other side 190 of the deflectable beam 144 and the opposing abutment surface 180 of the other protrusion 168. In the example shown in FIG. 20, the retention block 130 is shifted laterally along the first direction D1, which increases the spacing S2 on the second side 114 of the retention block 130 (e.g., see FIG. 21). FIG. 22 shows the retention block 130 laterally shifted along the second direction D2 to increase the spacings S1 at the first side 112 of the retention block 130. In certain examples, the lateral shifting increases the spacing S1, S2 sufficient to install the tube 170.

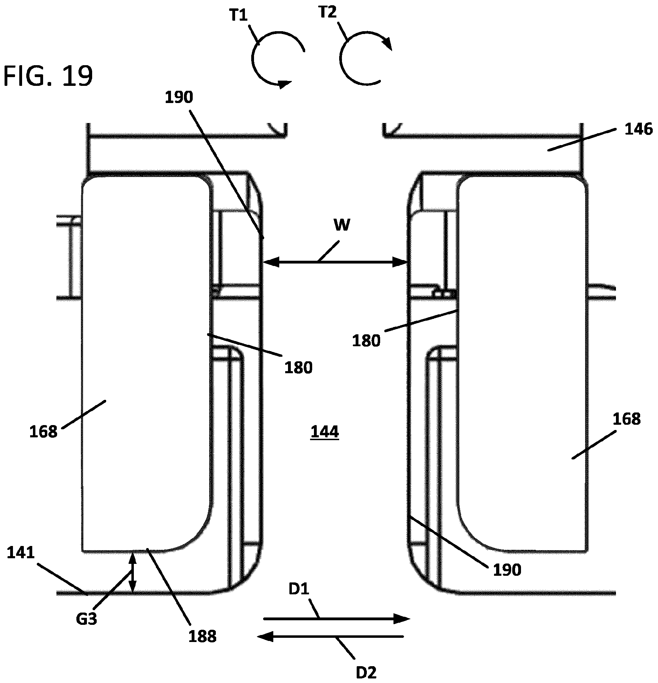

As further shown in FIG. 19, the abutment surfaces 141 of the retention block 130 are spaced from the second abutment surfaces 188 at the second ends 184 of the protrusions 168 by a gap G3 when the latch member arms 146 seat in the cradles 186 of the protrusions 168. The gap G3 enables limited axial movement of the retention block 130 along an insertion axis of the drop port 104 (e.g., until the abutment surfaces 141 of the retention block 130 engage the second abutment surfaces 188 of the protrusions 168). In certain examples, the first mounting arrangement 140 allows both lateral shifting and lifting of the retention block 130 relative to the base 102.

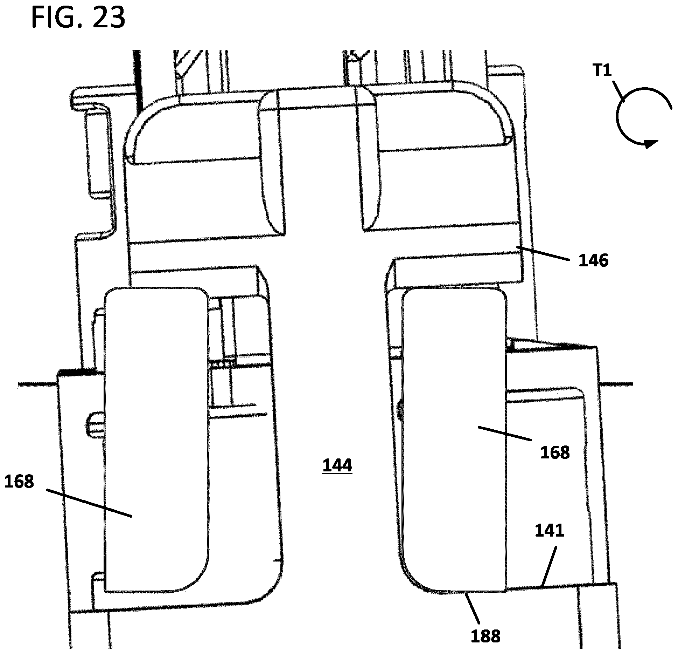

In certain implementations, the gap G3 in combination with the lateral spacing between the beam side 190 and the protrusion abutment surface 180 allows the retention block 130 to tilt relative to the base 102. For example, the retention block 130 may laterally tilt along a first rotational direction T1 or along an opposite rotational direction T2. FIG. 23 illustrates the retention block laterally tilted along the first rotational direction T1. During lateral tilting, the retention block 130 pivots about an intersection between one of the latch member arms 146 and one of the cradles 186. Accordingly, the bottom of the retention block 130 shifts more than the top of the retention block 130, thereby increasing a spacing S1, S2 between the outwardly-facing slots 132 towards the bottom of the retention block 130 and the peripheral wall 166 of the drop port 104.

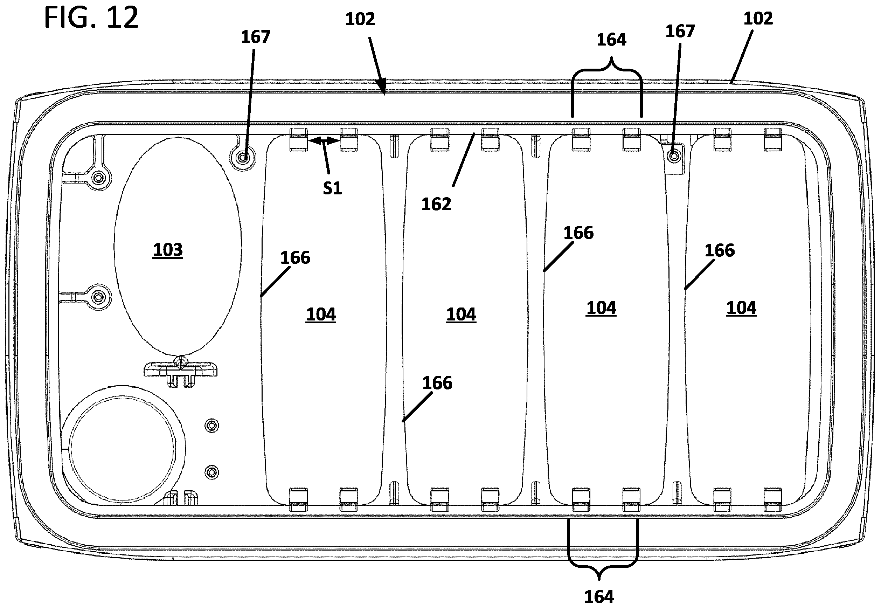

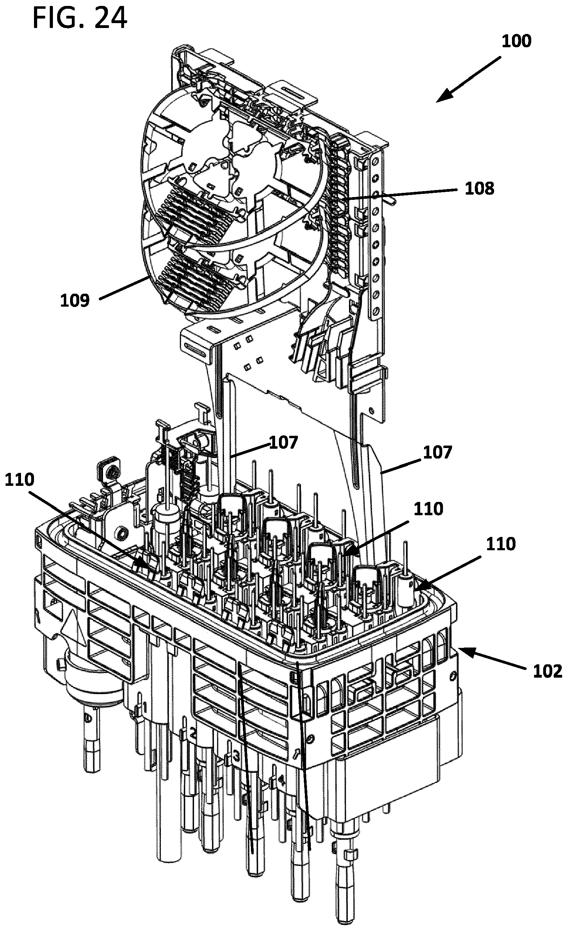

Referring to FIG. 24, the cable organizer 108 is mounted to the base 102 using a pair of legs 107. The legs 107 mount to anchor stations 167 carried with the base 102 (e.g., see FIGS. 11 and 12). In certain examples, at least one of the anchor stations 167 is disposed between two drop ports 104. In certain examples, both anchor stations 167 are disposed adjacent drop ports 104. The anchor stations 167 may interfere with hand access at the ends 116, 118 of the retention blocks 130 mounted at the drop ports 104 adjacent the anchor stations 167. For example, FIG. 15 shows an anchor station 167 opposing the pocket 134 at the second end 118 of the retention block 130. The anchor station 167 also may inhibit mounting the blocker 174 in the pocket 134.

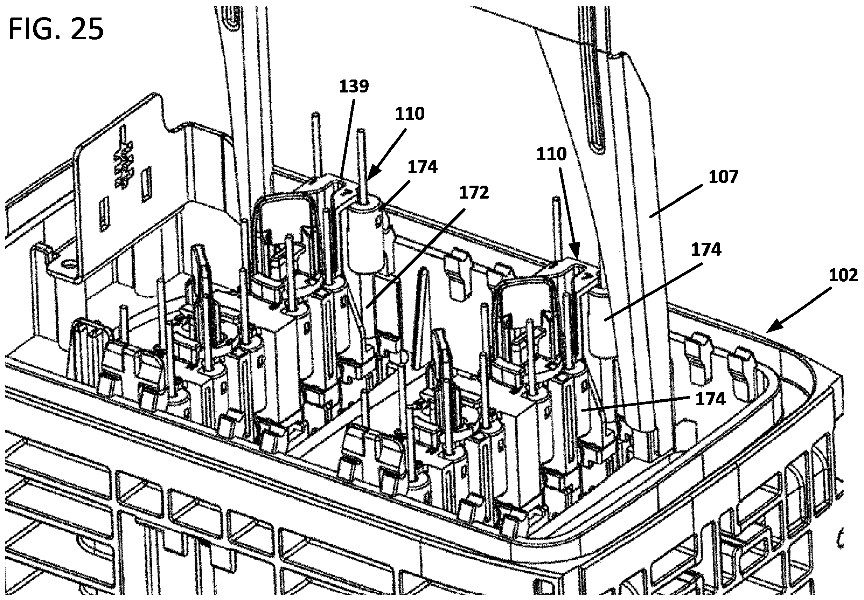

In certain implementations, the retention block 130 includes an extension 139 that defines one or more outwardly-facing pockets 134 that are taller or are disposed at elevated positions compared to the other pockets 134 of the retention block 130. For example, the retention walls 136 are located further from the corresponding outwardly-facing slots 132 compared to the other retention walls 136 of the retention block 130. Accordingly, the tubes 170 intended to be mounted adjacent the anchor stations 167 can be slid between the respective anchor station 167 and the respective outwardly-facing slot 132 while the blocker 174 is elevated (e.g., above the anchor station 167, above the base 102, etc.). The blocker 174 of the tube 170 can be placed within the elevated pocket 134 or at a top of the pocket 134 (e.g., see FIG. 25). In an example, elevating the pocket 134 enhances finger access by locating at least a portion of the pocket 134 above a remainder of the retention block 130. In an example, elevating the pocket 134 enhances finger access by locating at least a portion of the pocket 134 above a sidewall of the base 102.

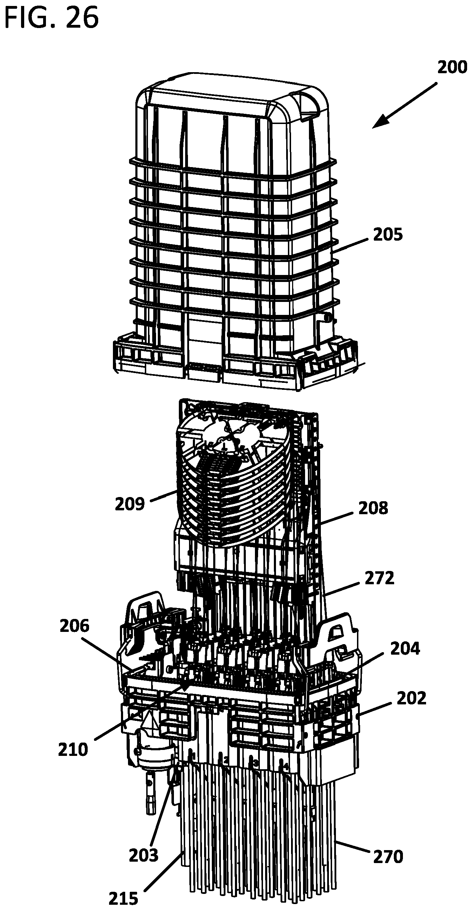

Referring now to FIGS. 26-38, another example cable closure 200 receiving one or more feeder cables 215 and one or more drop fibers 272 via tubes 270 (e.g., blown fiber conduits, pushable fiber ducts, etc.) is shown. In other examples, the closure 200 may receive jacketed cables instead of tubes 270. The cable closure 200 includes a base 202 defining at least one feeder cable port 203 and at least one drop port 204. In the example shown, the base 202 defines four drop ports 204. In other examples, however, the base 202 may define a greater or lesser number (e.g., one, two, three, five, six, eight, ten) of ports 204. A dome 205 is configured to mount to the base 202. A gasket or other seal 206 extends around a periphery of the base 202 and/or the open end of the dome 205 to provide sealing between the base 202 and the dome 205. A cable organizer 208 is attached to the base 202 and is enclosed by the dome 205 when the dome 205 is mounted to the base 202. One or more optical components (e.g., fiber management trays 209, bend radius limiters, routing guides, etc.) can be mounted to the cable organizer 208.

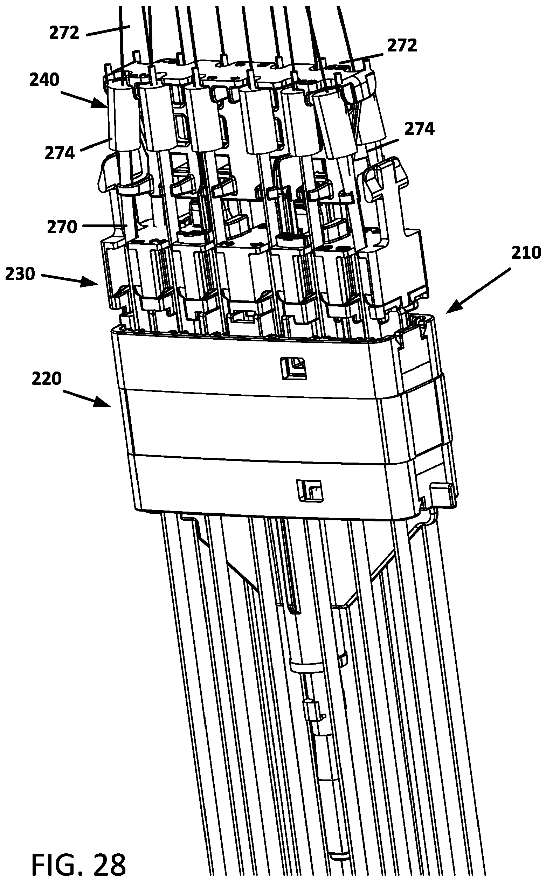

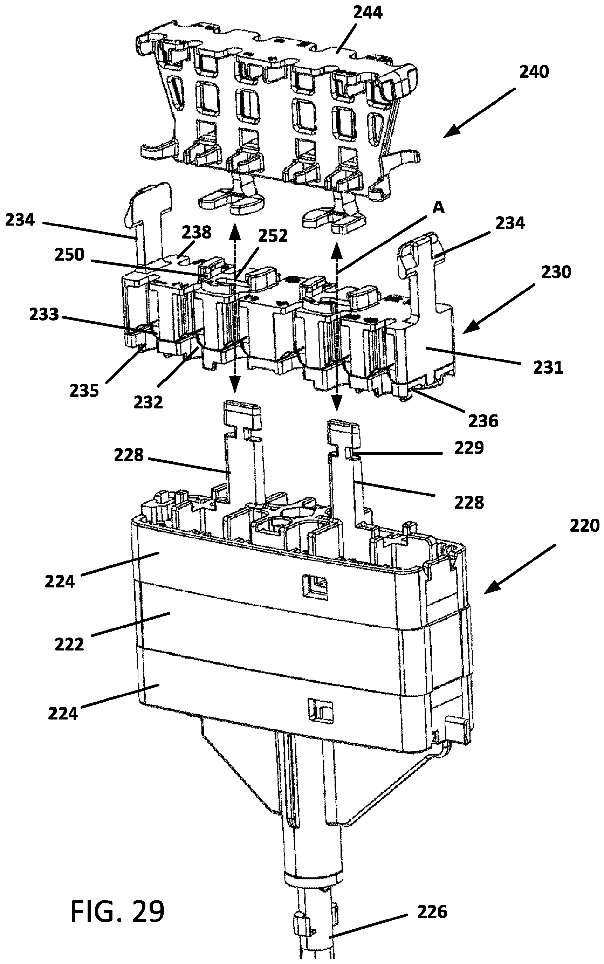

Each sealing and retention arrangement 210 includes a gel block 220, a retention block 230, and a securement block 240 that releasably couple together (e.g., see FIGS. 28 and 29). In some implementations, a spring clip 233 is carried by the retention block 230. In other implementations, the spring clip 233 is disposed between the retention block and a support plate when the gel block 220 and the retention block 230 are mounted together. The spring clip 233 anchors the tubes 270 or cables to the sealing and retention arrangement 210. In certain implementations, the securement block 240 releasably holds the gel block 220 to the retention block 230. In such implementations, the securement block 240 is removed from the retention block 230 in order to remove the gel block 220 from the retention block 230.

In some implementations, one or more tubes 270 are mounted to the sealing and retention arrangement 210. In other implementations, one or more drop cables are mounted to the sealing and retention arrangement 210. The sealing and retention arrangement 210 seals the corresponding drop port 204 and anchors the tubes 270 or cables relative to the closure 200. In some implementations, one or more of the tubes 270 or cables can be mounted to the sealing and retention arrangement 210 before the sealing and retention arrangement 210 is mounted in the drop port 204. In other implementations, one or more of the tubes 270 or cables can be mounted to the sealing and retention arrangement 210 after the sealing and retention arrangement 210 is mounted in the drop port 204 as will be discussed in more detail herein.

In certain implementations, the retention block 230 defines outwardly-facing slots 232 (e.g., FIGS. 28 and 29). A tube 270 can be slid into the outwardly-facing slot 232 to axially retain the tube 270 at the retention block 230. In certain examples, the retention block 230 defines outwardly-facing slots at opposite sides of the retention block 230. In certain implementations, the retention block 230 includes a spring clip 233 sandwiched between a first piece 231 and a second piece 235. In some examples, fastener openings extend through all three pieces 231, 233, 235 to enable fasteners to hold the retention block 230 together. In other implementations, however, the pieces 231, 233, 235 can be latched, friction-fit, or otherwise secured together. The spring clip 233 includes a plurality of sprung flanges that cooperate to define the slots 232 in which the tubes 270 can be disposed (e.g., see FIG. 29). The sprung flanges inhibit axial movement of the tubes 270 through the slots 232 while enabling selective lateral movement of the tubes 270 (e.g., out of the slots 232).

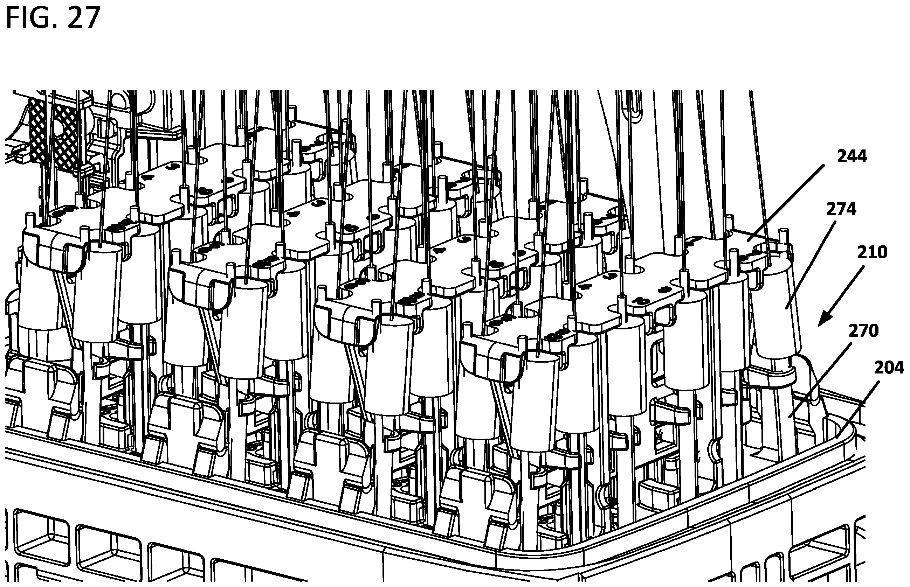

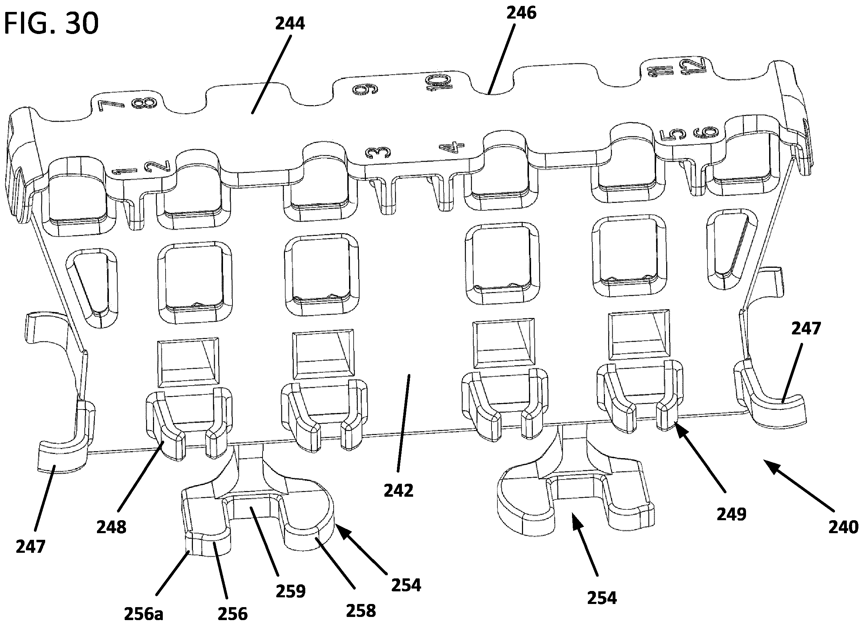

The securement block 240 is disposed within the dome 205 above the base 202 (e.g., see FIG. 27). FIGS. 30-35 illustrate an example securement block 240 configured in accordance with the principles of the present disclosure. The securement block 240 includes a main body 242 to which at least one lock member 254 is coupled. The lock member 254 is configured to connect to the retention block 230 at the mounting station 250 as will be described in more detail herein. The main body 242 extends from the lock member 254 to a retention wall 244 that overhangs opposite major surfaces of the main body 242. In certain implementations, the tubes 270 or cables are routed through the gel block 220, along the slots 232 of the retention block 230, and along the securement block 240.

In certain implementations, a blocker 274 can be disposed at an end of the tube 270 to seal between an interior of the tube 270 and the interior of the closure 200. In certain examples, the blocker 274 seals against water. In certain examples, the blocker 274 seals against gas (e.g., ambient air). In certain examples, the blocker 274 seals against both water and gas. In certain implementations, the blocker 274 is the same as the blocker 174 disclosed above with respect to FIGS. 8 and 9. In certain implementations, the blockers 274 are positioned at the securement block 240 and disposed within the interior of the dome 205 above the base 202. In certain implementations, the blockers 274 are positioned beneath the retention wall 244 in alignment with notches 246 defined in the retention wall 244 (e.g., see FIG. 28). Fibers 272 extending past the blockers 274 extend through the notches 246. In certain examples, the blockers 274 are pressed against the retention wall 244 using a spring force of the tubes 270 or cables. In certain examples, the blockers 274 are arranged in parallel along the securement block 240. In certain examples, end-most ones of the blockers 274 are angled relative to the inner-most ones of the blockers 274.

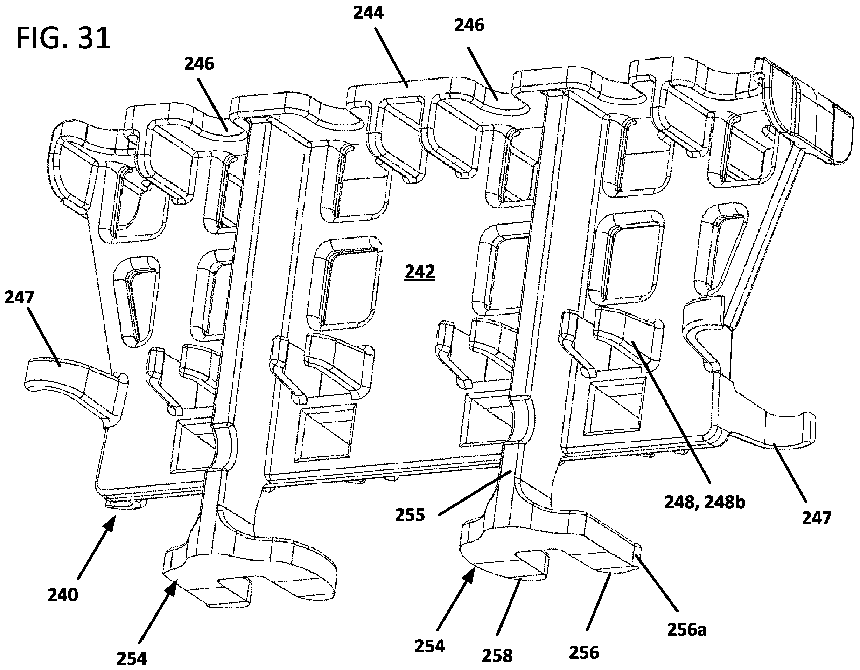

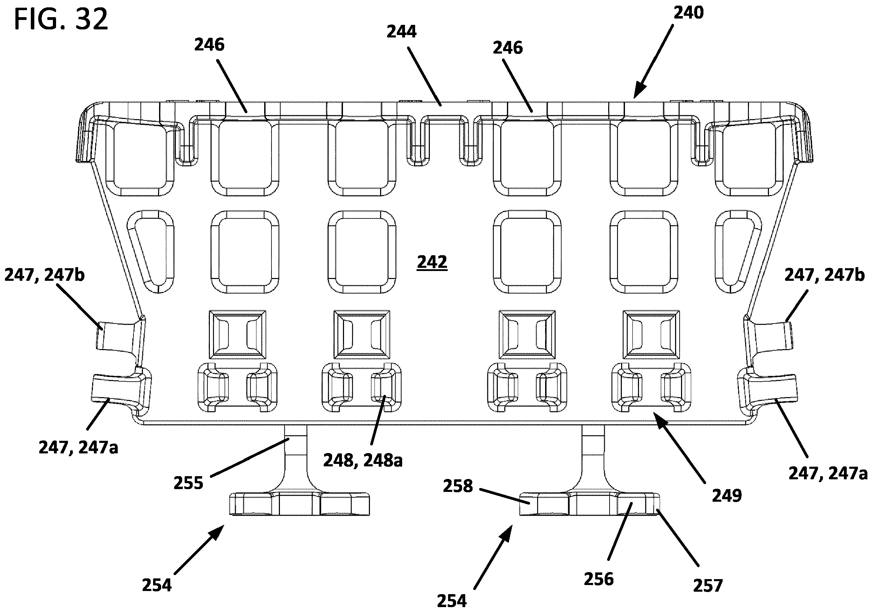

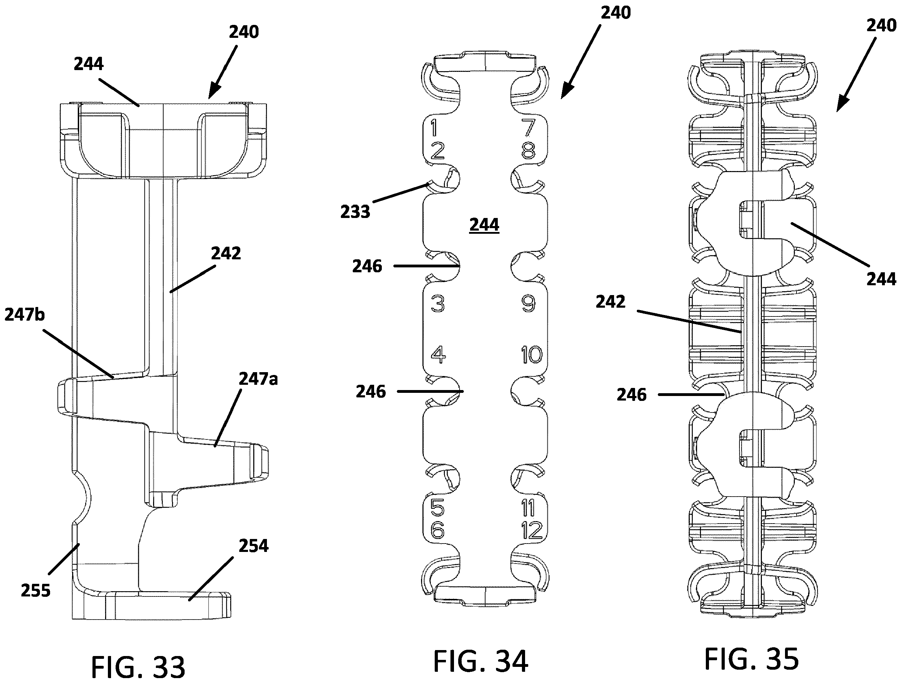

In certain implementations, retention fingers 248 extend outwardly from the main body 242 of the securement block 240 (e.g., see FIGS. 30 and 31). The retention fingers 248 guide the tubes 270 or cables over the securement block 240 towards the retention wall 244 (e.g., see FIG. 28). In certain examples, the retention fingers 248 inhibit lateral movement of the tubes 270 or cables away from the securement block 240. In certain implementations, retention fingers 248a extending outwardly from a first side of the main body 242 are vertically offset from retention fingers 248b extending outwardly from an opposite second side of the main body 242 (e.g., see FIGS. 32 and 33).

In certain examples, at least some of the retention fingers 248 are positioned in pairs 249 that align with the slots 232 of the retention block 230 when the securement block 240 is mounted to the retention block 230. Tubes 270 or cables routed through inner ones the slots 232 extend between the retention fingers 248 of respective pairs 249. In certain implementations, single retention fingers 247 are disposed at opposite ends of the main body 242 to aid in guiding the tubes 270 or cables routed through outer ones of the slots 232 towards the retention wall 244. In certain examples, distal ends of the single retention fingers 247 have a more pronounced curve than distal ends of the retention fingers 248. In certain examples, the single retention fingers 247 are horizontally aligned with the retention fingers 248 so that single retention fingers 247a at the first side of the main body 242 are vertically offset from single retention fingers 247b at the second side of the main body 242.

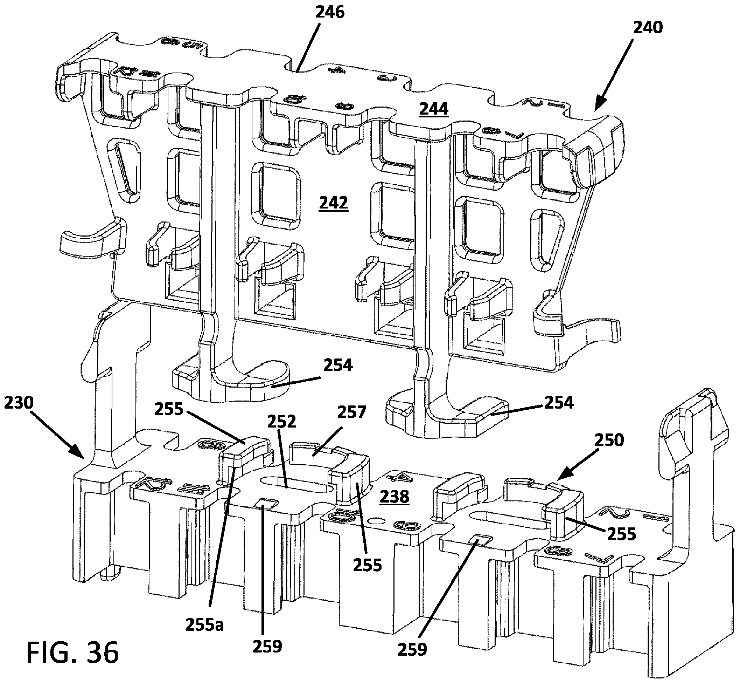

Referring to FIG. 29, the retention block 230 defines one or more through-passages 252 each having a passage axis A extending between opposite first and second ends 236, 238 of the retention block 230. In the example shown, the retention block 230 defines two through-passages 252 spaced apart along a length of the retention block 230. In certain examples, each through-passage 252 is oblong in shape. In certain examples, the retention block 230 is elongate along the length. In certain examples, the retention block 230 includes latch arms 234 disposed at opposite ends of the length. The latch arms 234 are configured to engage mounting structure within the base 202 of the closure 200 to hold the retention block 230 at the base 202. In certain implementations, the retention block 230 defines a mounting station 250 at the second end 238 in alignment with one of the through-passages 252. In the example shown, each through-passage 252 is elongate along the length of the retention block 230 (e.g., see FIG. 36).

In certain implementations, each mounting station 250 includes guides 255 that define opposing grooves 255a (e.g., see FIGS. 36-38). For example, each guide 252 may have a ledge or overhang so that the groove 255a is defined between the ledge and the second end 238 of the retention block 230. The guides 255 are disposed at opposite sides of the through-passage 252. In certain examples, each mounting station 250 includes a stop wall 257 disposed at one end of the grooves 255a. In certain examples, each mounting station 250 also includes a stop member 259 at the other end of the grooves 255a. The stop member 259 defines a ramp facing away from the mounting station 250 and a shoulder facing towards the mounting station 250.

The gel block 220 is configured to mount within each of the drop ports 204 so that the gel block 220 is surrounded (e.g., protected) by the base 202. The retention block 230 is disposed at least partially within an interior of the base 202. Referring to FIG. 29, the gel block 220 includes a gel seal 222 disposed between top and bottom plates 224. An actuator arrangement 226 extends through the gel seal 222 and both plates 224 to hold these components together. The gel seal 222 and plates 224 are shaped to receive tubes 270. For example, these components can define open channels along which tubes 270 can be routed. Tightening the actuator arrangement 226 draws the plates 224 closer together, thereby compressing the gel seal 222. Loosening the actuator arrangement 226 enables the plates 224 to move apart, thereby releasing the gel seal 222.

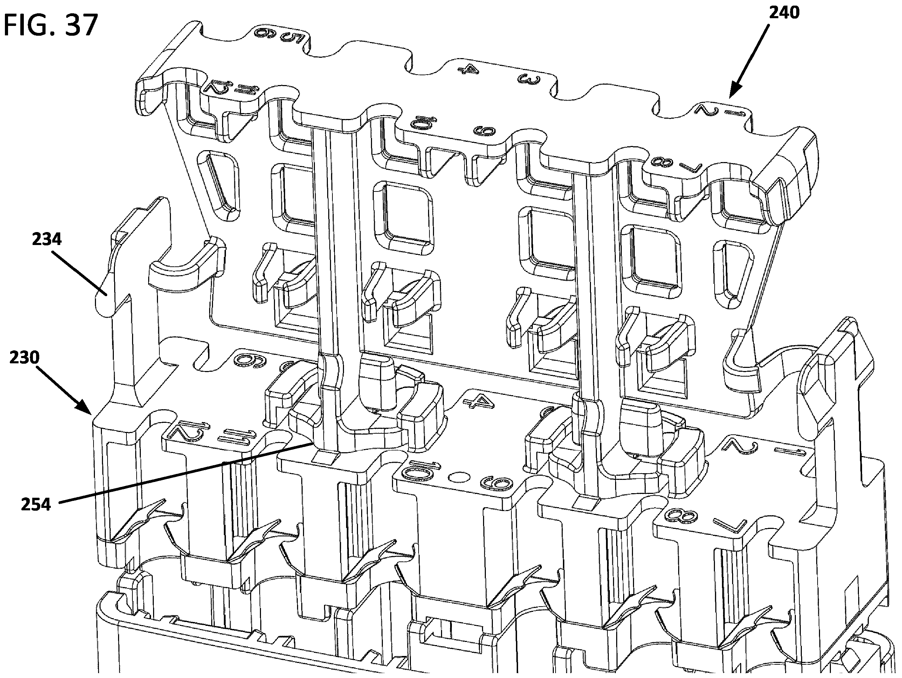

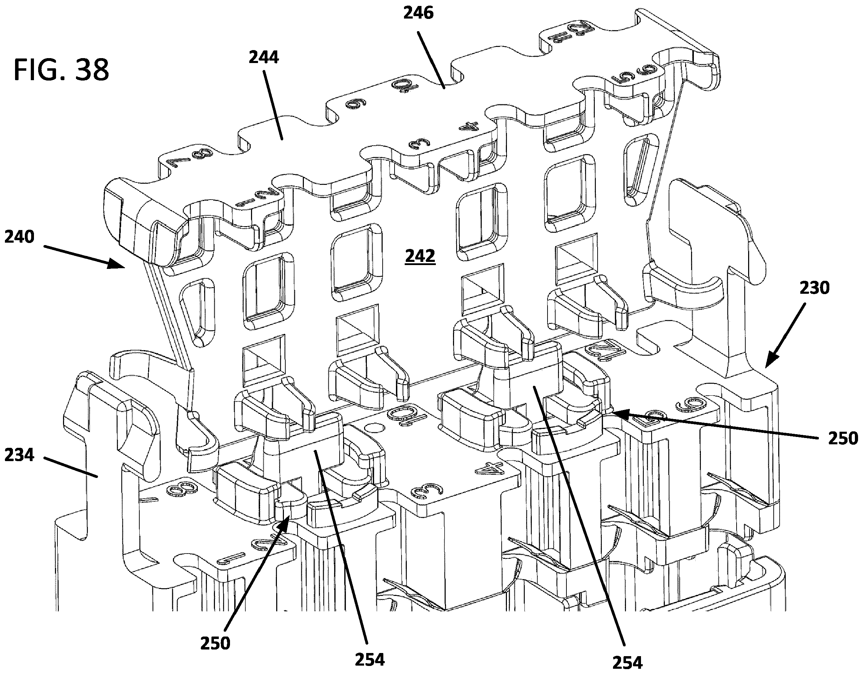

One or more extensions 228 extend upwardly from the top plate 224 to form part of a mounting arrangement. The extensions 228 are sized to fit through passages 252 defined through the retention block 230. The securement block 240 engages the distal end of each extension 228 after the extension 228 passes through the passages 252 to hold the gel block 220 at the retention block 230. In the example shown, the securement block 240 includes a lock member 254 that slides into the slots 229 defined at the ends of the extension 228 and into the grooves 255a at the mounting station 250 of the retention block 230 (e.g., see FIGS. 37 and 38).

As shown in FIGS. 30 and 31, the lock members 254 is configured to laterally slide into the mounting station 250 to engage both the gel block 220 and the retention block 230. include forked feet connected to the main body 242 by extensions 255. Each forked foot includes first and second gripping members 256, 258 spaced apart by a gap 259. In certain implementations, the first and second gripping members 256, 258 are different from each other. In certain examples, the first griping member 256 is relatively straight with a bump 256a disposed at a distal end. In the example shown, the bump 256a snaps over an edge of the respective guide 255 of the mounting station 250. In certain examples, the second gripping member 258 is curved (e.g., to match a contour of the groove 255a of the respective guide 255).

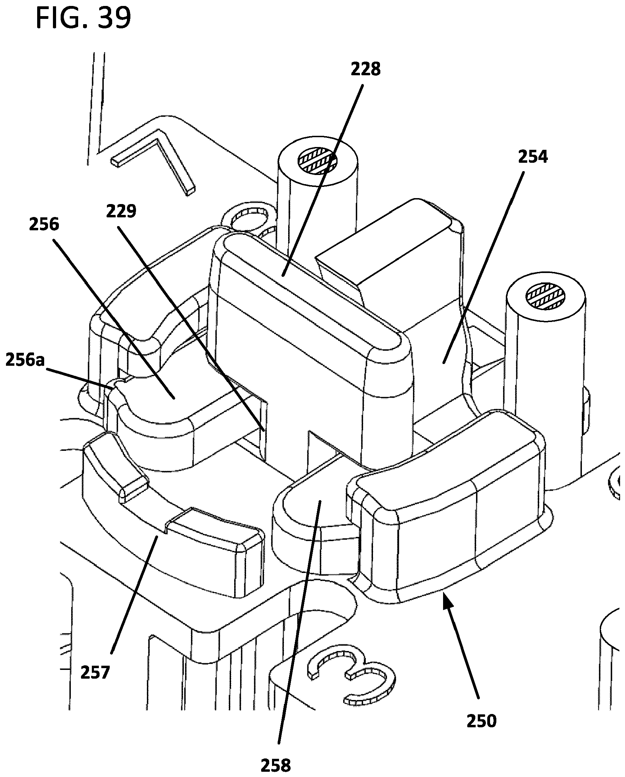

When the forked foot 254 is slid into the mounting station 250, the gripping members 256, 258 slide into the slots 229 defined in the upwardly extending arm 228 so that the arm 228 extends through the gap 259. Engagement between the gripping members 256, 258 and the arm 228 inhibits movement of the gel block 220 relative to the securement block 240 along the passage axis A (e.g., see FIG. 39). In the example shown in FIGS. 36-38, the securement block 240 includes two lock members 254 that each slide into a respective mounting station 250 to engage a respective arm 228 of the gel block 220.

Each of the gripping members 256, 258 slides into the groove 255a of a respective one of the guide members 255. Engagement between the gripping members 256, 258 and the second end 238 of the retention block 230 inhibits relative movement between the securement block 240 and the retention block 230 along the passage axis A in a first direction. Engagement between the gripping members 256, 258 and the ledges of the guide members 255 inhibits relative movement between the securement block 240 and the retention block 230 along the passage axis A in an opposite second direction (e.g., see FIG. 39). The stop wall 257 inhibits continued lateral sliding of the lock member 254 past the mounting station 250. The stop member 259 inhibits removal of the lock member 254 after the lock member 254 is engaged at the mounting station 250. For example, the stop member 259 may cam over the ramp and snap down over the shoulder of the stop member 259.

In use, the sealing and retention arrangement 210 is assembled by inserting one or more arms 228 of a gel block 220 along a passage axis A of a through-passage 252 of a retention block 230 until a main body of the gel block 220 opposes a first end 236 of the retention block 230 and a distal end of the arm 228 is accessible at an opposite, second end 238 of the retention block 230; disposing a securement block 240 at the second end 238 of the retention block 230; sliding the securement block 240 relative to the retention block 230 transverse to the passage axis A as a lock member 254 of the securement block 240 engages the distal end of the arm 228 of the gel block 220 to inhibit movement of the gel block 220 along the passage axis A; and continuing to slide the securement block 240 relative to the retention block 230 until the lock member 254 is trapped between two stops 257, 259 of a mounting station 250 of the retention block 230.

In certain implementations, a tube 270 or cable is routed along the gel block 220 and along the retention block 230. A gas blocker 274 is mounted at an end of the tube 270 so that an optical fiber 272 extends out of the tube 270 past the gas blocker 274. The gas blocker 274 is positioned at the securement block 240 so that the optical fiber 272 extends past the securement block 240. In certain examples, the gas blocker 274 is positioned to abut against an inside of the retention wall 244 of the securement block 240. In certain examples, the tube 270 or cable is snapped between a pair of retention fingers.

In certain implementations, the sealing and retention arrangement is inserted into one of the ports 204 of the base 202. An actuator 226 of the gel block 220 is actuated to compress the sealing gel 222 and thereby seal against an interior of the base 202. The sealing gel 222 seals against the tubes 270 or cables extending through the gel block 220. In certain examples, the actuator 226 can be released and the securement block 240 can be removed from the retention block 230 (e.g., unslid from the mounting stations 250) to enable movement of the gel block 220 relative to the retention block 230.

### Aspects of the Disclosure

Aspect 1. A method of installing a tube at a closure including a base and a sealing and retention arrangement mountable to the base, the sealing and retention arrangement including a gel block and a retention block, the retention block defining an outwardly-facing slot, the method comprising:
decoupling the gel block from the retention block and moving the gel block away from the retention block through a port defined by the base, the port being bounded by a circumferential wall;
moving the retention block relative to the base within a range of motion to enlarge a spacing between an open end of the outwardly-facing slot and the circumferential wall, the retention block remaining coupled to the base within the range of motion;
routing a first end of the tube through the port and past the retention block within the spacing between the outwardly-facing slot and the circumferential wall so that the tube remains external of the outwardly-facing slot;
attaching a blocker to the first end of the tube;
routing the tube partially back through the port; and
pushing the tube into the outwardly-facing slot of the retention block to inhibit further routing of the tube through the port.

Aspect 2. The method of aspect 1, wherein routing the tube partially back through the port comprises routing the tube back through the port until the blocker aligns with a pocket defined by the retention block; and wherein the method further comprises pushing the blocker into the pocket.

Aspect 3. The method of any of aspects 1-2, further comprising:
sealing the tube at the gel block; and
recoupling the gel block to the retention block so that the gel block is disposed within the port.

Aspect 4. The method of aspect 3, wherein sealing the tube at the gel block comprises:
opening the gel block;
routing the tube across the gel block; and
closing the gel block to surround the tube.

Aspect 5. The method of any of aspects 1-4, wherein moving the retention block relative to the base comprises laterally shifting the retention block relative to the base.

Aspect 6. The method of any of aspects 1-5, wherein moving the retention block relative to the base comprises tilting the retention block relative to the base.

Aspect 7. The method of any of aspects 1-4, wherein the slot is a first slot, and wherein the method further comprises:
moving the retention block relative to the base within the range of motion to move an outwardly-facing second slot to enlarge a second spacing between an open end of the second slot and the circumferential wall, the retention block remaining coupled to the base within the range of motion;
routing a first end of a second tube through the port and past the retention block within the second spacing between the second slot and the circumferential wall so that the second tube remains external of the second slot;
attaching a second blocker to the first end of the second tube;
routing the second tube partially back through the port; and
pushing the second tube into the second slot of the retention block to inhibit further routing of the second tube through the port.

Aspect 8. The method of aspect 7, wherein the second slot faces in an opposite direction from the first slot.

Aspect 9. The method of aspect 8, wherein the first slot is one of a plurality of first slots defined by the retention block and facing in a first direction and the second slot is one of a plurality of second slots defined by the retention block and facing in the opposite direction.

Aspect 10. The method of any of aspects 1-9, wherein the tube is a blown fiber tube.

Aspect 11. An enclosure arrangement comprising:
a closure defining an interior and defining a port leading from an exterior of the closure to the interior, the port having a transverse cross-sectional area;
a sealing and retention arrangement mountable to the closure, the sealing and retention arrangement including:
   a retention block mountable within the interior of the closure in alignment with the port, the retention block defining an outwardly-facing slot, the retention block including a mounting arrangement that enables movement of the retention block relative to the closure within a range of motion while the retention block remains coupled to the closure, wherein movement of the retention block in a first direction along the range of motion increases a spacing between the outwardly-facing slot and a circumferential wall of the port; and
   a gel block releasably coupled to the retention block, the gel block including an actuator for compressing and releasing a sealing gel.

Aspect 12. The enclosure of aspect 11, wherein the closure includes at least one pair of mounting stations, each mounting station including first and second protrusions that each extend from a first end to a second end, the first end of each protrusion defining a cradle, the second end of each protrusion defining an abutment surface, the first and second protrusions of each mounting station being spaced from each other by a first distance.

Aspect 13. The enclosure arrangement of aspect 12, wherein the mounting arrangement of the retention block includes opposing latch members, each of the latch members being aligned with one of the mounting stations when the sealing and retention arrangement is mounted at the closure, each latch member including a deflectable beam extending between a base end and a free end, the base end being attached to a main region of the retention block, each of the latch members also including first and second arms extending laterally outwardly from the free end, the first and second arms being sized to fit within the cradles of the first and second protrusions.

Aspect 14. The enclosure arrangement of aspect 13, wherein the deflectable beam is disposed between the first and second protrusions when the sealing and retention arrangement is mounted at the closure, the deflectable beam having a width extending between a first surface facing a first abutment surface of the first protrusion and a second surface facing a first abutment surface of the second protrusion, wherein the width extends less than three-quarters of the first distance.

Aspect 15. The enclosure arrangement of aspect 14, further comprising a tube having a cross-dimension that is sufficiently large for the tube to be axially retained when slid into the outwardly-facing slot.

Aspect 16. The enclosure arrangement of aspect 15, wherein the tube is a blown fiber tube.

Aspect 17. The enclosure arrangement of aspect 13, wherein the mounting arrangement includes abutment surfaces spaced from the second ends of the first and second protrusions to enable limited axial movement of the retention block relative to the closure.

Aspect 18. The enclosure arrangement of aspect 17, wherein the mounting arrangement enables lateral tilting of the retention block relative to the closure.

Aspect 19. The enclosure arrangement of any of aspects 11-18, wherein the retention block defines a pocket in alignment with the outwardly-facing slot, the pocket sized to receive a blocker mounted to a first end of a tube.

Aspect 20. The enclosure arrangement of any of aspects 11-19, wherein the outwardly-facing slot of the retention block is one of a plurality of outwardly-facing slots including a first row of slots facing outwardly in a first direction and a second row of slots facing outwardly in an opposite second direction.

Aspect 21. The enclosure arrangement of any of aspects 11-20, wherein the port is one of a plurality of ports, wherein the sealing and retention arrangement is one of a plurality of sealing and retention arrangements, and wherein each of the sealing and retention arrangements is mountable in one of the ports.

Aspect 22. A sealing and retention arrangement having first and second sides that each extend between opposite first and second ends, the sealing and retention arrangement comprising:
a first housing piece defining a row of outwardly-facing grooves;
a second housing piece defining a row of outwardly-facing pockets; and
a spring clip sandwiched between the first and second housing pieces, the spring clip defining a row of outwardly-facing slots that align with the outwardly-facing grooves and outwardly-facing pockets;
the second housing piece including an extended section that defines one of the outwardly-facing pockets of the row, the outwardly-facing pocket of the extended section being elevated or taller than a remainder of the pockets of the row.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A sealing and retention arrangement configured to be mounted to a closure, the sealing and retention arrangement comprising:
a retention block defining a through-passage having a passage axis extending between opposite first and second ends of the retention block, the retention block including guides at the second end that cooperate to define a mounting station in alignment with the through-passage, the retention block defining a plurality of outwardly-facing slots;
a gel block including an actuator for compressing and releasing a sealing gel, the gel block also including an upwardly extending arm sized to fit within the through-passage of the retention block from the first end of the retention block so that distal end of the arm is accessible at the second end of the retention block; and
a securement block configured to be releasably coupled to the retention block, the securement block including a lock member configured to be laterally slid along the guides and into the mounting station of the retention block, the lock member being configured to engage the distal end of the upwardly extending arm of the gel block at the second end of the retention block to inhibit relative movement of the retention block, the gel block, and the securement block along the passage axis, the securement block including a retention wall at an opposite end of the securement block from the lock member.

2. The enclosure arrangement of claim 1, further comprising a spring clip disposed between the retention block and the gel block, the spring clip defining a plurality of spring slots in alignment with the outwardly-facing slots of the retention block.

3. The enclosure arrangement of claim 1 or claim 2, wherein the upwardly-extending arm of the gel block is one of a plurality of upwardly-extending arms; and wherein the through-passage of the retention block is one of a plurality of through-passages; and wherein the mounting station is one of a plurality of mounting stations, each mounting station being aligned with one of the through-passages.

4. The enclosure arrangement of any of claims 1-3, the retention wall defining outwardly-facing notches.

5. The enclosure arrangement of any of claims 1-4, wherein the securement block includes a plurality of outwardly-facing retention fingers, wherein the retention fingers disposed at a first side of the body are vertically offset from retention fingers disposed at an opposite second side of the body.

6. The enclosure arrangement of claim 5, wherein at least some of the outwardly-facing retention fingers are grouped in pairs of opposing retention fingers, each pair being aligned with one of the outwardly-facing slots of the retention block, and wherein the plurality of retention fingers also include single retention fingers disposed at edges of the retention block, the single retention fingers having distal ends with a more pronounced curve than distal ends of the retention fingers grouped in pairs.

7. The enclosure arrangement of any of claims 1-6, wherein each mounting station includes opposing stop members at opposite ends of the guides.

8. The enclosure arrangement of claim 7, wherein one of the opposing stop members includes a wall and the other of the opposing stop members includes a ramp.

9. The enclosure arrangement of any of claims 1-8, wherein the lock member of the securement block includes a foot disposed at a distal end of a leg extending downwardly from a main body of the securement block, the foot including spaced apart extensions.

10. An enclosure arrangement comprising:
a closure defining an interior and defining a port leading from an exterior of the closure to the interior; and
the sealing and retention arrangement of any of claims 1-9 disposed within the port.

11. The enclosure arrangement of claim 10, wherein the retention block includes opposing latch members configured to engage the closure, and wherein the retention block is elongate along a length extending between the opposing latch members.

12. The enclosure arrangement of any of claims 10-11, wherein the port of the closure is one of a plurality of ports; and wherein the sealing and retention arrangement is one of a plurality of sealing and retention arrangements, each sealing and retention arrangement being configured to mount within a respective one of the ports.

13. The enclosure arrangement of any of claims 10-12, further comprising a plurality of tubes extending into the closure through the port, each of the tubes extending through the sealing gel of the gel bock, along one of the outwardly-facing slots of the retention block, and along the securement block so that a respective gas blocker mounted to each tube abuts the retention wall of the securement block.

14. A method of assembling a sealing and retention arrangement for mounting within a closure, the method comprising:
inserting an arm of a gel block along a passage axis of a through-passage of a retention block until a main body of the gel block opposes a first end of the retention block and a distal end of the arm is accessible at an opposite, second end of the retention block;
disposing a securement block at the second end of the retention block;
sliding the securement block relative to the retention block transverse to the passage axis as a lock member of the securement block engages the distal end of the arm of the gel block to inhibit movement of the gel block along the passage axis;
continuing to slide the securement block relative to the retention block until the lock member is trapped between two stops of a mounting station of the retention block;
routing a tube along the gel block and along the retention block;
mounting a gas blocker at an end of the tube so that an optical fiber extends out of the tube past the gas blocker;
positioning the gas blocker at the securement block so that the optical fiber extends past the securement block; and
snapping the tube into a pair of retention fingers carried by the securement block.

15. A method of installing a tube at a closure including a base and a sealing and retention arrangement mountable to the base, the sealing and retention arrangement including a gel block and a retention block, the retention block defining an outwardly-facing slot, the method comprising:
decoupling the gel block from the retention block and moving the gel block away from the retention block through a port defined by the base, the port being bounded by a circumferential wall;
moving the retention block relative to the base within a range of motion to enlarge a spacing between an open end of the outwardly-facing slot and the circumferential wall, the retention block remaining coupled to the base within the range of motion;
routing a first end of the tube through the port and past the retention block within the spacing between the outwardly-facing slot and the circumferential wall so that the tube remains external of the outwardly-facing slot;
attaching a blocker to the first end of the tube;
routing the tube partially back through the port; and
pushing the tube into the outwardly-facing slot of the retention block to inhibit further routing of the tube through the port.

16. The method of claim 15, wherein moving the retention block relative to the base comprises laterally shifting the retention block relative to the base.

17. The method of claim 15, wherein moving the retention block relative to the base comprises tilting the retention block relative to the base.
